# EUROPEAN PATENT APPLICATION

(11) **EP 2 644 435 A1**
(43) Date of publication of application: **02.10.2013**
(21) Application number: 10860039.6
(22) Date of filing: 22.11.2010
(51) Int. Cl.: B60L 7/10, B60L 11/18

(54) **TWO-WHEELED ELECTRIC VEHICLE**

(71) Applicant: Yamaha Hatsudoki Kabushiki Kaisha, Iwata-shi, Shizuoka 438-8501 (JP)
(72) Inventor: TANAKA, Hiroshi, Iwata-shi Shizuoka 438-8501 (JP); SHIRAZAWA, Hideki, Iwata-shi Shizuoka 438-8501 (JP); SUZUKI, Hideaki, Iwata-shi Shizuoka 438-8501 (JP); ATSUMI, Takayuki, Iwata-shi Shizuoka 438-8501 (JP); MATSUEDA, Hideki, Iwata-shi Shizuoka 438-8501 (JP)
(74) Representative: Zimmermann, Tankred Klaus
(86) International application number: PCT/JP2010/070824
(87) International publication number: WO 2012/070105

(57) **Abstract**

A two-wheeled electric vehicle includes a battery, a three-phase AC electric motor, a motor controller, an accelerator operator, an accelerator operation detection means, a brake operator, and a brake operation detection means. The electric motor has a magnetic field varying means for changing the strength of a magnetic field, and is arranged to generate a driving force to be transmitted to a drive wheel when a current is supplied from the battery and to generate a regenerative current when the drive wheel is rotated by an external force. The motor controller includes a regeneration control means for executing a regeneration operation of supplying the regenerative current, generated by the electric motor, to the battery when a predetermined accelerator operation is detected and when operation of the brake operator is detected, and a regeneration amount setting means for setting a maximum regenerative current to a first fixed value when the predetermined accelerator operation is detected and for setting the maximum regenerative current to a second fixed value when operation of the brake operator is detected.

## Description

### TECHNICAL FIELD

The present invention relates to a two-wheeled electric vehicle arranged so that a driving force, generated by a three-phase AC electric motor, is transmitted to a drive wheel.

### BACKGROUND ART

Patent Literature 1 discloses an operation controller for an electric vehicle, with which a vehicle wheel is driven by an electric motor having a battery as a power source and the battery is charged by regenerative braking. The operation controller judges between a traveling mode and a brakingmode based on operation information, such as accelerator opening, vehicle velocity, etc. In the braking mode, the operation controller performs a regeneration operation of making the electric motor operate in a power generating region. In the regeneration operation, a regenerative current command value that is in accordance with the accelerator opening and the vehicle velocity is determined, and a motor drive circuit is driven based on the command value.

### CITATION LIST

### PATENT LITERATURE

Patent Literature 1: Japanese Unexamined Patent Appliction Publication No. 11-215610 (paragraph 0018)

### SUMMARY OF INVENTION

### SOLUTION TO PROBLEM

With the prior art described in Patent Document 1, the regenerative current command value is set in accordance with the accelerator opening and the vehicle velocity, and there is thus a possibility that a sufficient regeneration amount cannot be secured.
To provide a solution to this challenge, the present inventors considered keeping the regenerative current command value fixed regardless of the accelerator opening and the vehicle speed. However, the present inventors found out that this solution accompanies another challenge. That is, a braking torque increases in accordance with the deceleration of the electric motor. Specifically, when the rotation speed of the electric motor decreases in a state where the regenerative current command value is kept fixed, the braking torque increases accordingly. Therefore, when such an arrangement is applied to a two-wheeled electric vehicle, a rider feels the change of the braking torque strongly during deceleration, and the riding feeling is poor.

Therefore, the securing of a sufficient regeneration amount in a two-wheeled electric vehicle while lessening the change of braking torque to improve the riding feeling is an unsolved challenge found by the present inventors.
The present invention provides a two-wheeled electric vehicle having a drive wheel. The two-wheeled electric vehicle includes a battery, a three-phase AC electric motor, a motor controller for controlling a supply of current from the battery to the electric motor, an accelerator operator operated by a rider, an accelerator operation detection means for detecting an operation amount of the accelerator operator, a brake operator operated by the rider, and a brake operation detection means for detecting operation or non-operation of the brake operator. The electric motor has a magnetic field varying means for changing the strength of a magnetic field and is arranged to generate a driving force to be transmitted to the drive wheel when the current is supplied from the battery and to generate a regenerative current when the drive wheel is rotated by an external force. The motor controller includes a regeneration control means for executing a regeneration operation of supplying the regenerative current, generated by the electric motor, to the battery when a predetermined accelerator operation is detected by the accelerator operation detection means and when operation of the brake operator is detected by the brake operation detection means, and a regeneration amount setting means for setting a maximum regenerative current, which is a maximum value of the regenerative current, to a predetermined first fixed value when the predetermined accelerator operation is detected by the accelerator operation detection means and for setting the maximum regenerative current to a predetermined second fixed value when operation of the brake operator is detected by the brake operation detection means.

With this arrangement, when the predetermined accelerator operation is detected, the maximum regenerative current is set to the first fixed value. Also, when operation of the brake operator is detected, the maximum regenerative current is set to the second fixed value. A sufficient regeneration amount can thereby be secured because fixed maximum regenerative currents are set respectively in accordance with the predetermined accelerator operation and with the operation of the brake operator. The electric motor includes the magnetic field varying means, and the strength of its magnetic field can be changed. The braking torque generated by the electric motor during the regeneration operation can thus be adjusted by changing the strength of the magnetic field by means of the magnetic field varying means. For example, by changing the strength of the magnetic field in accordance with the rotation speed of the electric motor, the braking torque can be adjusted appropriately. Therefore when the electric motor is decelerated while securing the fixed regenerative current, the change of braking torque can be made gradual by changing the strength of the magnetic field of the electric motor in accordance with the deceleration. The change of braking torque can thereby be lessened to improve the riding feeling while securing a sufficient regeneration amount. By securing a sufficient regeneration amount, the travel distance per single charge of the battery can be increased.

The predetermined accelerator operation may be an operation of setting the operation amount of the accelerator operator (accelerator operation amount) to zero. With this arrangement, by setting the accelerator operation amount to zero, the regenerative current is controlled at the first fixed value and a corresponding braking force is obtained.
In a preferred embodiment of the present invention, the first fixed value is less than the second fixed value. With this arrangement, the braking torque generated by the electric motor when the brake operation is performed is greater than the braking torque generated when the predetermined accelerator operation is performed. The electric motor thus generates a large braking torque during the brake operation, and a braking torque of a magnitude that is in accordance with the rider's intention can thus be generated. Also, by the maximum regenerative current being set to a large value, the kinetic energy of the electric motor can be used efficiently for charging the battery. The energy efficiency can thereby be improved further, and the travel distance per single charge of the battery can be increased.

In a preferred embodiment of the present invention, the two-wheeled electric vehicle further includes a vehicle speed detection means for detecting a traveling speed of the two-wheeled electric vehicle, and when the vehicle speed detection means detects a vehicle speed equal to or less than a predetermined threshold, the regeneration control means makes the regeneration current smaller when the vehicle speed is lower. With this arrangement, at the vehicle speed threshold or in a low vehicle speed region lower than the threshold, the lower the speed, the smaller the regenerative current, and accordingly, the smaller the braking torque generated by the electric motor. A braking sensation during low speed travel can thereby be eased and a more natural riding feeling can be realized.

With a hybrid vehicle having an internal combustion engine and an electric motor as drive sources, making the regeneration amount of the electric motor small at a low-speed gear position, at which an engine brake is highly effective, may be considered to realize smooth travel. However, such an arrangement is not one that can be adopted in a two-wheeled electric vehicle, having an electric motor as the sole drive source, and differs from the arrangement with which the regenerative current is changed according to the vehicle velocity.

Also with a hybrid vehicle, making the regenerative torque small when the rotation speed of the engine is low may be considered to avoid engine stall. However, such an arrangement normally cannot be adopted in a two-wheeled electric vehicle with which engine stall does not have to be taken into consideration. This is because if there is no need to take engine stall in consideration, the regenerative current should be made as large as possible to improve the energy utilization efficiency.

The arrangement in a two-wheeled electric vehicle of making the regenerative current smaller when the vehicle speed is lower in the low vehicle speed region is based on the discovery of the novel challenge of easing the braking sensation during low speed travel. This arrangement is thus not one that is suggested by the above-described problems in a hybrid vehicle.
If the vehicle speed of the two-wheeled electric vehicle corresponds (for example, is proportional) to the rotation speed of the electric motor, the vehicle speed detection means may be a rotation speed detection means for detecting the rotation speed of the electric motor.

In a preferred embodiment of the present invention, the regeneration control means sets the regenerative current to zero when the vehicle speed detection means detects a vehicle speed equal to or lower than a predetermined low speed threshold. With this arrangement, the regenerative current becomes zero when the vehicle speed becomes not more than the low speed threshold. The electric motor thus no longer generates a braking torque, and a more natural riding feeling can thus be realized in an extreme low speed range. If the detection of the vehicle speed is to be substituted by the detection of the rotation speed of the electric motor, the regenerative current is controlled to be zero when the rotation speed is at a predetermined low speed threshold or in an extreme low speed region lower than the threshold.

In a preferred embodiment of the present invention, the two-wheeled electric vehicle further includes a rotation speed detection means for detecting the rotation speed of the electric motor. Also, the motor controller further includes a magnetic field control means that controls the magnetic field varying means according to the rotation speed detected by the rotation speed detection means. The regeneration control means includes a current command value setting means for setting a command value of the current that is to be made to flow to the electric motor in accordance with the strength of the magnetic field of the electric motor and the maximum regenerative current set by the regeneration amount setting means, and controls the current supply to the electric motor in accordance with the current command value.

With this arrangement, the strength of the magnetic field of the electric motor is controlled in accordance with the rotation speed of the electric motor. This enables, for example, the magnetic field to be strengthened in a low speed rotation range to increase a low speed torque or the magnetic field to be weakened in a high speed rotation range to make high speed rotation possible. During the regeneration operation, the current command value is set in accordance with the strength of the magnetic field of the electric motor and the regenerative current to be attained. The strength of the magnetic field is thereby changed in accordance with the change of the rotation speed of the electric motor, and the current command value is set to keep the regenerative current fixed in accordance with the change. The torque generated by the electric motor is substantially proportional to the current command value, and consequently, a gradually changing braking torque is obtained. The gradual change of braking torque provides an excellent riding feeling to the rider.

The motor controller is preferably arranged to perform feedback control of the electric motor in accordance with the deviation between the detected current detected by the current detection means and the current command value. The current supply to the electric motor is thereby controlled so that the detected current follows the current command value, and therefore a sufficient regeneration amount can be secured during the regeneration operation.

### BRIEF DESCRIPTION OF DRAWINGS

[FIG. 1] FIG. 1 is a left side view of a two-wheeled electric vehicle according to a preferred embodiment of the present invention.
[FIG. 2] FIG. 2 is a right side view of a rear portion of the two-wheeled electric vehicle.
[FIG. 3] FIG. 3 is an exploded perspective view of a swing unit included in the two-wheeled electric vehicle and shows a state where the swing unit is viewed obliquely rearward from the right.
[FIG. 4] FIG. 4 is a partial sectional view of the swing unit and a rear wheel and shows a state where the swing unit and the rear wheel are viewed from above.
[FIG. 5] FIG. 5 is a partially-exploded right side view of the swing unit and shows a state where a rotor and a first stator of an electric motor are removed.
[FIG. 6] FIG. 6 is a right side view of the electric motor and shows a state where the rotor is removed.
[FIG. 7] FIG. 7 is a sectional view of a second stator and shows a section of the second stator sectioned along a circumferential direction.
[FIG. 8] FIG. 8A and FIG. 8B are illustrative views of principal portions for describing changes of output characteristics of the electric motor in accordance with displacement (rotation around a motor shaft) of the second stator.
[FIG. 9] FIG. 9 is a block diagram of an electrical arrangement related to control of the electric motor and a stator driving device.
[FIG. 10] FIG. 10 is a block diagram for describing functions of a CPU provided in a motor controller.
[FIG. 11] FIG. 11 is an example of a reference map for a q-axis upper limit current value.
[FIG. 12] FIG. 12 is an example of a reference map for a d-axis upper limit current value and d-axis lower limit current value.
[FIG. 13] FIG. 13 shows an example of a target gap map referenced by a target gap calculating portion.
[FIG. 14] FIG. 14 shows an example of a short-circuit threshold map referenced by a short-circuit/release processing portion.
[FIG. 15] FIG. 15 is a flowchart for describing a short-circuit execution judgment process performed by the short-circuit/release processing portion.
[FIG. 16] FIG. 16 is a flowchart for describing a three-phase short-circuiting process and a releasing process therefor.
[FIG. 17] FIGS. 17A to 17D are principle diagrams for describing timings of releasing short-circuited states of respective phases.
[FIG. 18] FIG. 18 is a flowchart of a process of a regeneration amount setting portion.
[FIG. 19] FIG. 19 shows a relationship between the rotation speed of the electric motor and a q-axis current command value (regenerative current command value) during a regeneration operation.
[FIG. 20] FIG. 20 is a diagram for describing an effect of control of the gap during regeneration.
[FIG. 21] FIG. 21 shows a relationship between the rotation speed of the electric motor and a d-axis current command value (current command value for field-weakening control) during the regeneration operation.
[FIG. 22] FIG. 22 shows a relationship between the rotation speed of the electric motor and a braking torque generated by the electric motor during the regeneration operation.
[FIG. 23] FIG. 23 shows a relationship between the rotation speed of the electric motor and the target gap during the regeneration operation.
[FIG. 24] FIG. 24 shows a relationship between the rotation speed of the electric motor and a regenerative current (battery current) returned to the battery during the regeneration operation.
[FIG. 25] FIG. 25 shows an example of measurement data for a case where an accelerator opening is set to zero without performing a brake operation.
[FIG. 26] FIG. 26 shows an example of measurement data for a case where the accelerator opening is set to zero and a brake operation is performed (case where a mechanical braking force of a brake device is not acting).
[FIG. 27] FIG. 27 shows an example of measurement data for a case where the accelerator opening is set to zero and a brake operation is performed (case where the mechanical braking force of the brake device is acting).

### DESCRIPTION OF EMBODIMENTS

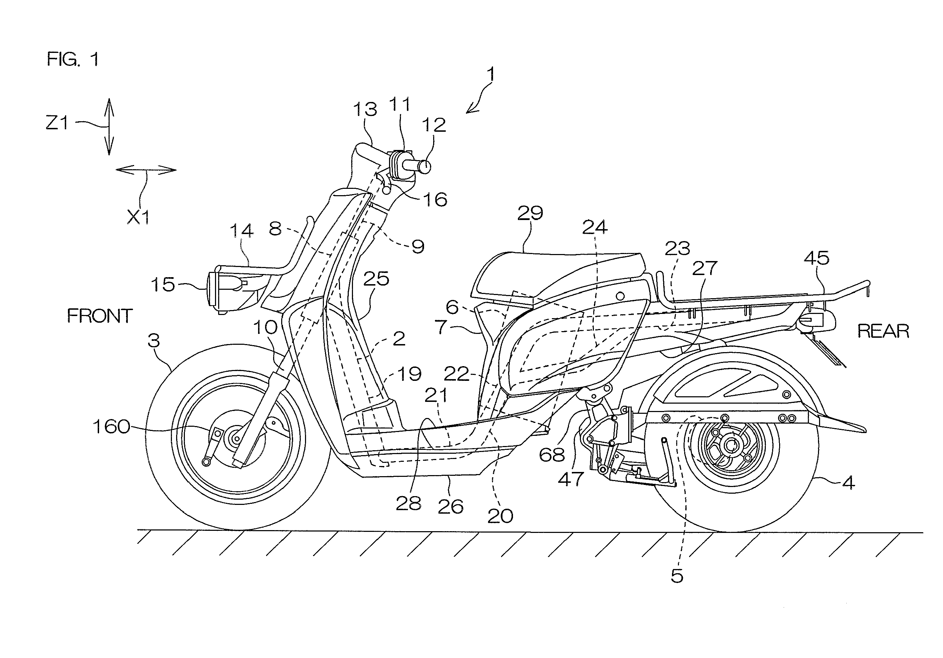

FIG. 1 is a left side view of a two-wheeled electric vehicle 1 according to a preferred embodiment of the present invention. In the present preferred embodiment, the two-wheeled electric vehicle 1 is a scooter type vehicle. The two-wheeled electric vehicle 1 is capable of traveling with freight being placed on its front portion and on its rear portion and is suitable for use as a freight vehicle. Each of front, rear, up, down, right, and left directions mentioned in the following description is based on a point of view of a rider (driver) when he/she is facing forward with the two-wheeled electric vehicle 1 being in a basic attitude corresponding to a state of traveling straight on a horizontal surface. The arrangement of the two-wheeled electric vehicle 1 shall be described based on the two-wheeled electric vehicle 1 being in a state of standing vertically with a front wheel 3 and a rear wheel 4 grounded on a road surface A1 and without the rider riding thereon.

The two-wheeled electric vehicle 1 includes a vehicle body frame 2, the front wheel 3, the rear wheel 4, an electric motor 5, a battery 6, and a vehicle body cover 7. In the two-wheeled electric vehicle 1, the electric motor 5 is driven by electric power supplied from the battery 6 and the rear wheel 4 is driven as a drive wheel by the output of the electric motor 5.
The two-wheeled electric vehicle 1 has a head tube 8 disposed at a front upper portion of the two-wheeled electric vehicle 1. A steering shaft 9 is rotatably inserted in the head tube 8. A pair of right and left front forks 10 are mounted on a lower end portion of the steering shaft 9. The front wheel 3 is mounted on the front forks 10.

A handle 11 is mounted on an upper end portion of the steering shaft 9. The rider can rotate the steering shaft 9, the front forks 10, and the front wheel 3 around an axis of the steering shaft 9 by operating the handle 11.
Grips 12 are disposed at right and left end portions of the handle 11, respectively (only the left grip is shown in the figure). The right grip is an accelerator grip (accelerator operator). The rider can adjust the output of the electric motor 5 by rotating the accelerator grip. Brake levers 16 (brake operators) are disposed respectively in front of the right and left grips 12. The brake levers 16 are arranged to be operated to the front and rear by the fingers of the rider. For example, the right brake lever 16 is arranged to be operated to brake the front wheel 3, and the left brake lever 16 is arranged to be operated to brake the rear wheel 4.

A meter 13 is disposed near a center of the handle 11. A loading platform 14 is disposed below the meter 13. The loading platform 14 is fixed to the head tube 8. A head lamp 15 is fixed to a lower portion of the loading platform 14.
The vehicle body frame 2 extends rearward from the head tube 8. The vehicle body frame 2 includes a down tube 19 and a pair of right and left frame main bodies 20 disposed behind the down tube 19. The down tube 19 extends obliquely downward to the rear from a lower portion of the head tube 8. In a side view, each frame main body 20 extends rearward from a lower end portion of the down tube 19 and an intermediate portion thereof in a vehicle front-rear direction X1 is formed to a sigmoidal shape. To be more detailed, each frame main body 20 includes a first frame portion 21, a second frame portion 22, a third frame portion 23, and a fourth frame portion 24. The first frame portion 21 extends substantially straight to the rear from the lower end portion of the down tube 19 and is slightly inclined obliquely upward toward the rear. The second frame portion 22 rises obliquely upward toward the rear, a lower end portion thereof is coupled to a rear end portion of the first frame portion 21, and an upper end portion thereof is coupled to the third frame portion 23. The third frame portion 23 extends rearward in an attitude that is slightly inclined obliquely upward toward the rear. The fourth frame portion 24 extends rearward from an intermediate portion of the second frame portion 22, is curved obliquely upward toward the rear at a middle portion, and is connected to an intermediate portion of the third frame portion 23.

The vehicle body cover 7 is mounted on the vehicle body frame 2. The vehicle body cover 7 includes a front cover 25 covering the head tube 8, a lower cover 26 extending rearward from a lower portion of the front cover 25, and a rear cover 27 disposed behind the front cover 25.
The front cover 25 surrounds the head tube 8 and a portion of the steering shaft 9, and surrounds the down tube 19. The lower cover 26 extends rearward from a lower portion of the front cover 25 and covers a portion of the frame main bodies 20 from below and from both the right and left sides. Footrest portions 28 are disposed at upper end portions of the lower cover 26. The footrest portions 28 are provided for a rider to put his/her feet thereon and are formed to be substantially flat.

As a whole, the rear cover 27 is shaped so as to extend obliquely upward toward the rear from a rear portion of the lower cover 26. The rear cover 27 covers a portion of the frame main bodies 20 from the front side and from both the right and left sides.
Below a seat 29, a housing space is formed between the pair of right and left frame main bodies 20. In this housing space, a battery 6 is disposed as a power supply of the electric motor 5. The battery 6 is a chargeable secondary battery.

A loading platform 45 is disposed behind the seat 29. This is disposed above the third frame portion 23 and is supported by the third frame portion 23.

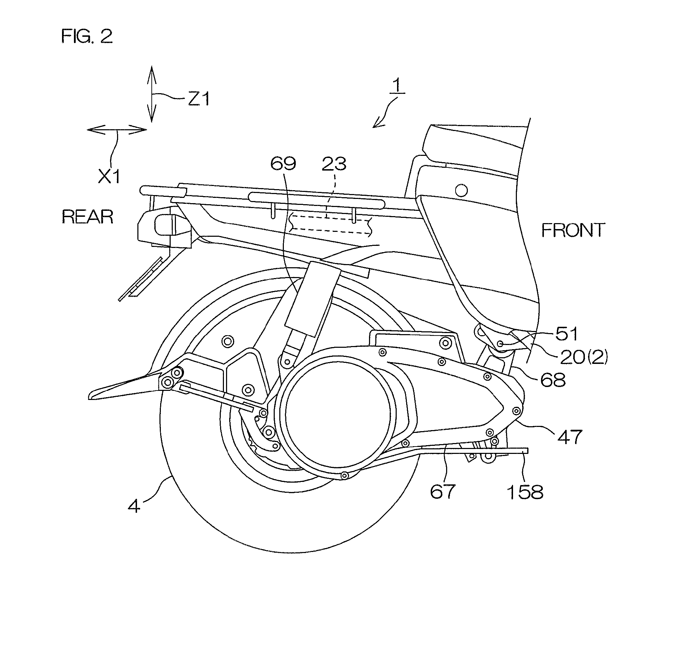

FIG. 2 is a right side view of a rear portion of the two-wheeled electric vehicle 1. The two-wheeled electric vehicle 1 includes a swing unit 47 that is swingably coupled to the vehicle body frame 2. The swing unit 47 includes a motor case 67 and a pair of right and left coupling arms 68 projecting from a front end portion of the motor case 67. The coupling arms 68 extend obliquely upward toward the front from the motor case 67. Front end portions of the respective coupling arms 68 are coupled to the pair of frame main bodies 20 via a pivot shaft 51. The swing unit 47 is thereby enabled to swing around the pivot shaft 51. The swing unit 47 is disposed at the right of the rear wheel 4. A rear portion of the swing unit 47 is coupled to the third frame portion 23 via a shock absorber 69.

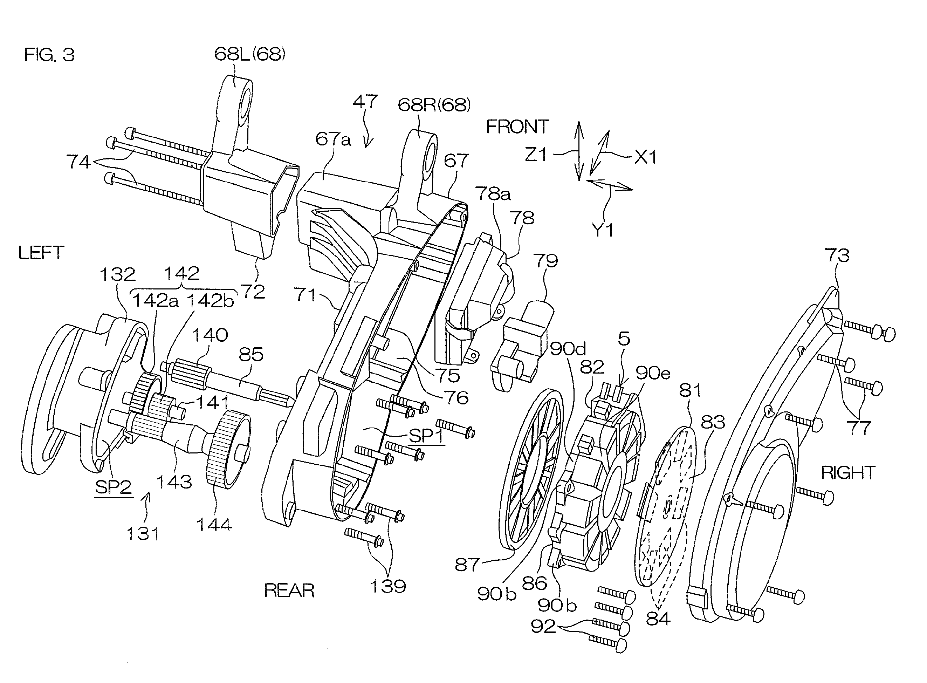

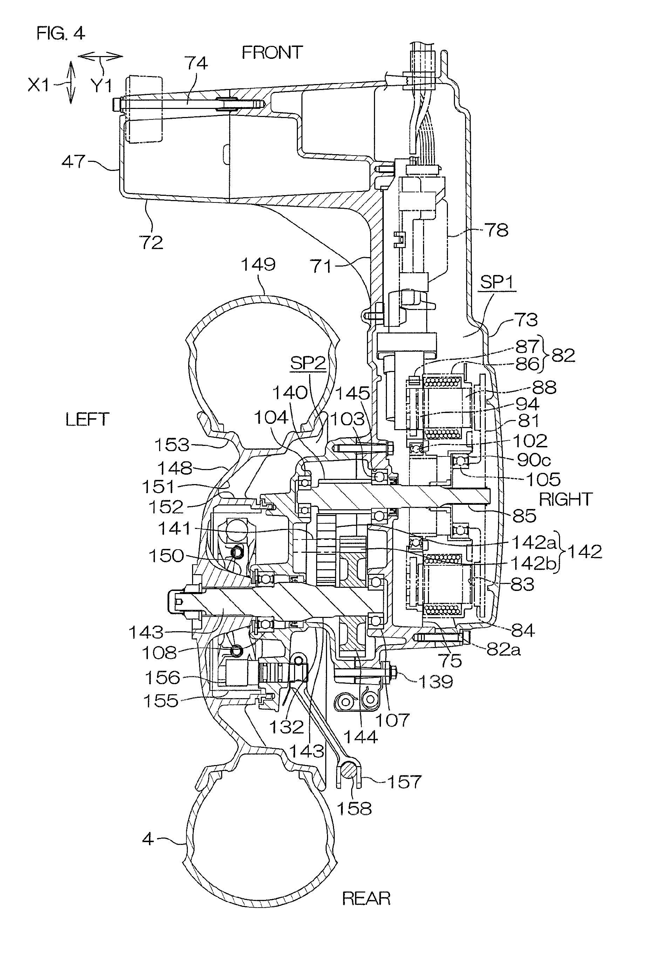

FIG. 3 is an exploded perspective view of the swing unit 47 and shows a state where the swing unit 47 is viewed obliquely rearward from the right. Also, FIG. 4 is a partial sectional view of the swing unit 47 and the rear wheel 4 and shows a state where the swing unit 47 and the rear wheel 4 are viewed from above. The motor case 67 of the swing unit 47 includes a motor case main body 71, a coupling member 72 fixed to a front end portion of the motor case main body 71, and a cover 73 covering a right side surface of the motor case main body 71.

The motor case main body 71 has a front end portion 67a extending in a right-left direction Y1 and is formed to a shape that extends rearward from a right portion of the front end portion 67a.
The coupling member 72 is disposed at the left of the front end portion of the motor case main body 71. The coupling member 72 and the front end portion of the motor case main body 71 are fixed using a plurality of screw members 74. The coupling arm 68L (68) is formed integral to the coupling member 72. The other coupling arm 68R (68) is formed integral to the front end portion of the motor case main body 71. The front end portion 67a of the motor case 67 is formed by the coupling member 72 and the front end portion of the motor case main body 71.

The motor case main body 71 includes a side wall 75 extending in the front-rear direction X1 and a tubular peripheral wall 76 extending rightward from an outer peripheral edge portion of the side wall 75. A motor housing space SP1, capable of housing the electric motor 5, is formed by the side wall 75 and the peripheral wall 76. The cover 73 is disposed at the right of the peripheral wall 76 and covers the motor housing space SP1. The cover 73 is fixed using a plurality of screw members 77 to a right end surface of the peripheral wall 76. An unillustrated gasket, etc., are disposed between the peripheral wall 76 and the cover 73. In the motor housing space SP1, a motor controller 78 is housed further to the front than the electric motor 5.

The swing unit 47 includes a speed reduction mechanism 131 for transmitting the output of the electric motor 5 to the rear wheel 4. The speed reduction mechanism 131 is arranged to decelerate the rotation of a motor shaft 85 of the electric motor 5 to amplify the torque from the motor shaft 85 and output the amplified torque to the rear wheel 4. The speed reduction mechanism 131 is housed in a gear case 132 fixed to the motor case 67. The gear case 132 is fixed to a left side surface of the motor case 67 using a plurality of screw members 139. A gear housing space SP2, housing the speed reduction mechanism 131, is formed in the gear case 132.

The speed reduction mechanism 131 is arranged as a two-stage speed reduction arrangement. Specifically, the speed reduction mechanism 131 includes an input gear 140, an intermediate shaft 141, an intermediate gear 142, and an output gear 144 disposed on an axle 143. In the present preferred embodiment, the respective gears 140, 142, and 144 are spur gears. The input gear 140 is disposed integrally on the motor shaft 85, which is an output shaft of the electric motor 5. The motor shaft 85 is inserted through an insertion hole 145 formed in the side wall 75 of the motor case main body 71. A bearing 103 is disposed between the insertion hole 145 and an intermediate portion of the motor shaft 85. The motor shaft 85 extends toward the left of the bearing 103 to the gear housing space SP2 and a bearing 104 is fitted on a left end portion thereof. The bearing 104 is held by a left side wall of the gear case 132. The intermediate shaft 141 extends in the right-left direction, and opposite end portions thereof are respectively supported by bearings (not shown) on the left side wall of the gear case 132 and on a left side wall of the motor case 67. The intermediate gear 142 is disposed on the intermediate shaft 141. The intermediate gear 142 is arranged to be engaged with the input gear 140 and engaged with the output gear 144. The intermediate gear 142 has a first intermediate gear 142a with a larger diameter and a second intermediate gear 142b with a smaller diameter. The first intermediate gear 142a is engaged with the input gear 140. The second intermediate gear 142b is engaged with the output gear 144. The output gear 144 is formed to be greater in diameter than the second intermediate gear 142b and is fixed to the axle 143.

The axle 143 extends in the right-left direction Y1, and bearings 107 and 108 are respectively fitted on a right end portion and an intermediate portion thereof. The bearings 107 and 108 are respectively held by the left side wall of the motor case 67 and the left side wall of the gear case 132. The axle 143 projects to the left of the gear case 132 and is coupled to the rear wheel 4.
The rear wheel 4 includes a wheel member 148 and a tire 149 mounted on the wheel member 148. The wheel member 148 includes a hub 150, a disk 151, a tubular portion 152 surrounding the hub 150, and a rim 153. The hub 150 is fixed to the axle 143. The wheel member 148 (rear wheel 4) is thereby coupled to the axle 143 in an integrally rotatable manner. The tire 149 is fitted in the rim 153.

A brake device 155 is disposed between the wheel member 148 and the gear case 132. In the present preferred embodiment, the brake device 155 is a drum brake device. An operation shaft 156 extends to the right from the brake device 155. A right end portion of the operation shaft 156 is fixed to an operation lever 157. The operation lever 157 extends obliquely downward toward the rear from the operation shaft 156. An operation cable 158 (see FIG. 2) is connected to a lower end portion of the operation lever 157. The operation cable 158 is arranged to be displaced in the front-rear direction X1 by operation of the left brake lever 16 (see FIG. 1) that is operated by the rider.

A similar brake device 160 (see FIG. 1) is also provided for the front wheel 3, and is arranged to operate in linkage with the operation of the right brake lever (not shown) disposed in front of the right grip (not shown).
The electric motor 5 includes a rotor 81 and a stator 82 that faces the rotor 81 . In the present preferred embodiment, the electric motor 5 is an eight-pole, twelve-slot, three-phase brushless motor (three-phase AC electric motor). In the present preferred embodiment, the electric motor 5 is an axial gap motor and a gap in an axial direction (right-left direction Y1) of the electric motor 5 is provided between the rotor 81 and stator 82. The rotor 81 is disposed at the right of the stator 82.

The rotor 81 includes a rotor core 83 formed to a disk-like shape and rotor magnets 84 fixed to the rotor core 83. The rotor core 83 is connected to a right end portion of the motor shaft 85 by spline coupling, etc., and is integrally rotatable with the motor shaft 85. Also, the rotor core 83 is supported by the stator 82 via the bearing 105. The rotor magnets 84 are fixed to a left side surface of the rotor core 83, and face the stator 82. A plurality (eight in the present preferred embodiment) of the rotor magnets 84 are provided, and are disposed at equal intervals along a circumferential direction of the rotor core 83. The rotor magnets 84 are disposed so that N and S poles alternately face the stator 82 along the circumferential direction of the rotor core 83.

The stator 82 is disposed at the left of the rotor 81. The stator 82 is formed to a tubular shape that surrounds the motor shaft 85. The stator 82 includes a first stator 86 and a second stator 87 that are aligned in the axial direction of the electric motor 5. The first stator 86 is disposed at the left of the rotor 81, and is fixed by use of screw members 92 to the side wall 75 of the motor case main body 71. The second stator 87 is disposed at the left of the first stator 86, and is made displaceable in a circumferential direction of the stator 82 (rotatable around the motor shaft 85) with respect to the first stator 86. The strength of the magnetic field of the stator 82 can thereby be changed.

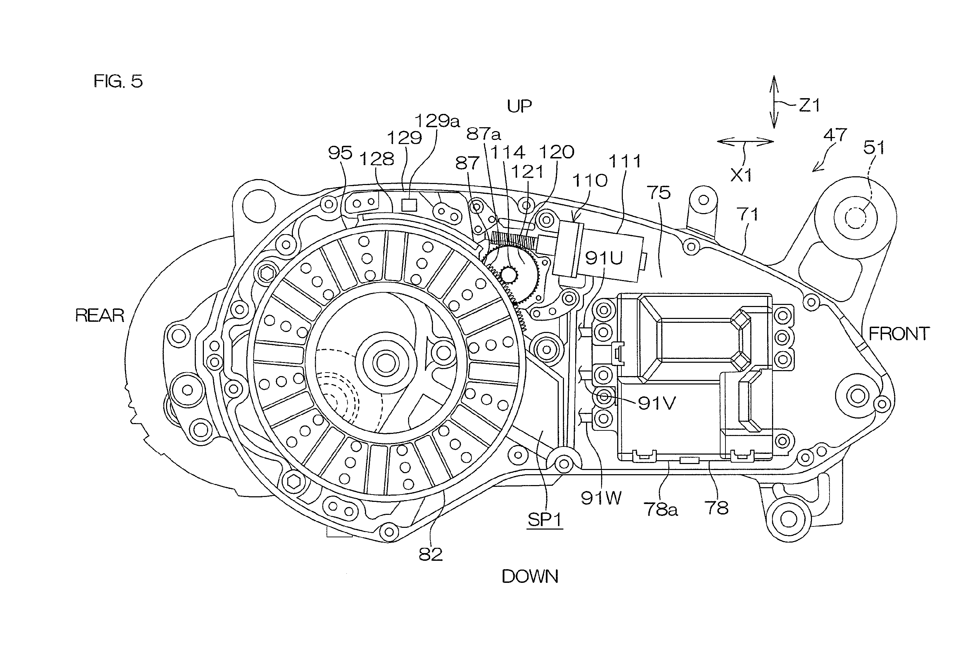

FIG. 5 is a partially-exploded right side view of the swing unit 47, and shows a state where the rotor 81 and the first stator 86 of the electric motor 5 are removed. The swing unit 47 includes the motor controller 78, the electric motor 5, and a stator driving device 79 that are disposed inside the motor housing space SP1. Inside the motor housing space SP1, the motor controller 78 is disposed at the front, and the electric motor 5 is disposed at the rear. The stator driving device 79 is disposed at an upper region inside the motor housing space SP1 between the motor controller 78 and the electric motor 5.

The motor controller 78 is arranged with a motor drive circuit, a control circuit controlling the motor drive circuit, etc. , housed inside a case 78a formed using a synthetic resin, etc.
The stator driving device 79 includes a drive unit 110, a gear mechanism 113, and an output gear 114. The drive unit 110 includes a drive motor 111. If necessary, the drive unit 110 may include a speed reduction mechanism that decelerates the rotation of the drive motor 111. The gear mechanism 113 is a worm speed reduction mechanism that includes a worm shaft 120 and a worm wheel 121. The drive unit 110 is arranged to rotatingly drive the worm shaft 120 around its axis. The output gear 114 is, for example, a spur gear. The output gear 114 is coupled to the worm wheel 121, and arranged to rotate integrally with the worm wheel 121. Therefore, when the drive motor 111 is driven to rotate (rotate forward or in reverse), the rotation thereof is transmitted by the gear mechanism 113 to the output gear 114 to cause rotation of the output gear 114.

The output gear 114 is engaged with a tooth portion 87a formed on a portion of the outer periphery of the second stator 87. The second stator 87 is displaced in a circumferential direction of the electric motor 5 in accordance with the rotation of the output gear 114. In the present preferred embodiment, the second stator 87 is displaceable in the circumferential direction of the electric motor 5 within an angular range of approximately 15 degrees.
A magnetized portion 128 is disposed at an outer peripheral portion of the second stator 87 in a region apart from the tooth portion 87a. A magnetic pattern is formed in the magnetized portion 128. Displacement of the magnetized portion 128 (second stator 87) is detected by a magnetic field position sensor 129a. The magnetic field position sensor 129a is disposed at a near side (first stator 86 side) of the second stator 87 and is held by a circuit board 129 fixed to the first stator 86. A plurality of magnetic field position sensors 129a may be provided if necessary. For example, the magnetization pattern of the magnetized portion 128, the positioning of the magnetic field position sensor 129a, and the number of magnetic field position sensors 129a, etc., are determined so that at least a displacement amount of the second stator 87 can be detected. More specifically, the magnetized portion 128 and the one or plurality of magnetic field position sensors 129a are preferably designed to enable detection of an origin position of the second stator 87, a displacement direction of the second stator 87, and the displacement amount of the second stator 87.

An output of the magnetic field position sensor 129a is output via the circuit board 129 to the motor controller 78. The motor controller 78 is electrically connected to the drive motor 111 . The motor controller 78 is arranged to control the driving of the drive motor 111 while referencing the position of the second stator 87 detected by the magnetic field position sensor 129a. The second stator 87 is thereby displaced.

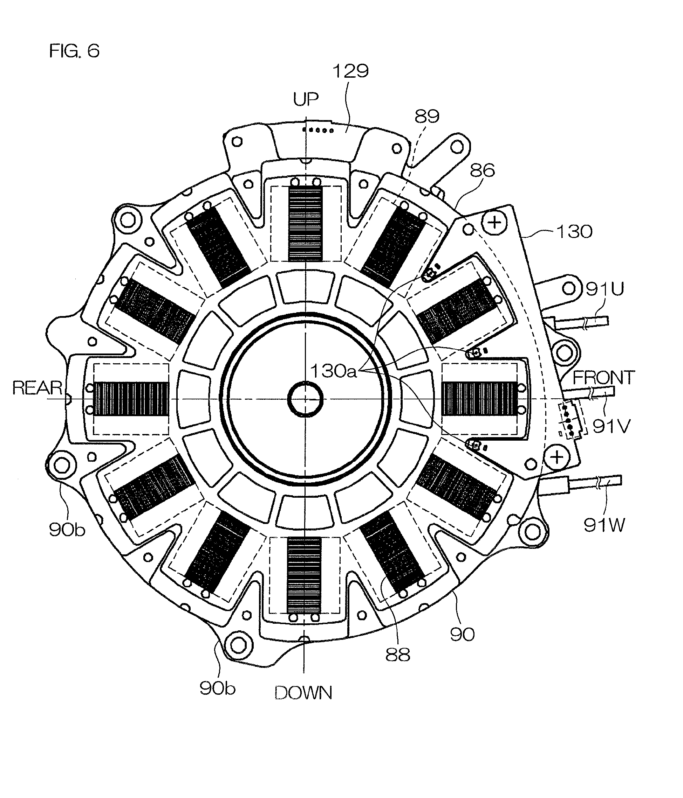

FIG. 6 is a right side view of the electric motor 5, and shows a state where the rotor 81 is removed. The first stator 86 includes first teeth 88, coils 89, and a first synthetic resin member 90. The first teeth 88 are formed to columnar shapes by overlapping a plurality of magnetic steel sheets parallel to the axial direction of the electric motor 5. A plurality of the first teeth 88 are provided and disposed at equal intervals in the circumferential direction of the stator 82. In the present preferred embodiment, twelve first teeth 88 are provided.

The coils 89 are wound around the respective first teeth 88. The coils 89 are aligned in an ordered manner in the order of a U-phase coil, V-phase coil, W-phase coil, U-phase coil, V-phase coil, ... along the circumferential direction of the electric motor 5. The U-phase coils are connected to a U-phase feeder 91U. The V-phase coils are connected to a V-phase feeder 91V. The W-phase coils are connected to a W-phase feeder 91W. The feeders 91U, 91V, and 91W are respectively connected to the motor controller 78 (see FIG. 5).

The first synthetic resin member 90 is molded over the first teeth 88 and the coils 89. The first synthetic resin member 90 includes flange portions 90b projecting outward from its outer peripheral surface. The flange portions 90b are disposed at a left end portion of the first stator 86, and are adjacent to the second stator 82. A plurality of the flange portions 90b are formed along the circumferential direction of the electric motor 5. A screw insertion hole is formed in each flange portion 90b, and a screw member 92 (see FIG. 3) is inserted in the screw insertion hole. As shown in FIG. 3, each screw member 92 is threadingly coupled to a threaded hole formed in the side wall 75 of the motor case main body 71. The first stator 86 is thereby fixed to the motor case main body 71.

A sensor board 130 is disposed adjacent to the first synthetic resin member 90. Magnetic pole position sensors 130a, corresponding to the U-phase, V-phase, and W-phase, are held on the sensor board 130. Each magnetic pole position sensor 130a is made up of a Hall IC sensor, etc. , and detects a change of magnetic field in accordance with the rotation of the rotor 81. In the present preferred embodiment, the magnetic pole position sensors 130a are disposed in slots between adjacent teeth in a side view. The output of each magnetic pole position sensor 130a is input into the motor controller 78. The motor controller 78 controls electric power supplied to the respective feeders 91U, 91V, and 91W based on the signals from the respective magnetic pole position sensors 130a.

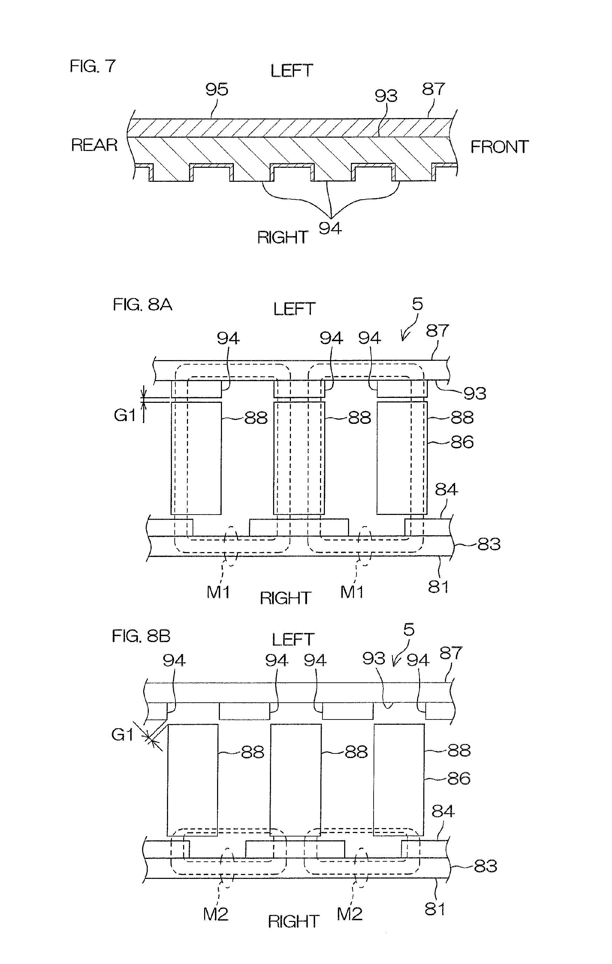

FIG. 7 is a sectional view of the second stator 87, and shows a section of the second stator 87 sectioned along the circumferential direction. The second stator 87 includes a yoke 93, second teeth 94, and a second synthetic resin member 95.
The yoke 93 is a plate-like portion of circular annular shape. The second teeth 94 project toward the first stator 86 from a right side surface of the second yoke 93. A plurality of the second teeth 94 are provided at equal intervals along the circumferential direction of the electric motor 5. In the present preferred embodiment, the number of the second teeth 94 is the same as the number of the first teeth 88. The second synthetic resin member 95 is formed to a circular annular shape and is molded over the second yoke 93 and the respective second teeth 94. A right end surface of each second tooth 94 is exposed from the second synthetic resin member 95.

As is most apparent in FIG. 4, in the axial direction of the electric motor 5, the length of each second tooth 94 is shorter than the length of each first tooth 88. A bearing 102 is mounted on an inner peripheral surface of the second synthetic resin member 95. The bearing 102 is mounted on the motor case main body 71. The second stator 87 is thereby supported relatively rotatable with respect to the first stator 86. That is, by driving the stator driving device 79, the rotational position of the second stator 87 in the circumferential direction of the electric motor 5 can be changed.

FIG. 8A and FIG. 8B are illustrative views of principal portions for describing changes of output characteristics of the electric motor 5 in accordance with the displacement (rotation around the motor shaft 85) of the second stator 87.
The second stator 87 is displaceable between a first position shown in FIG. 8A and a second position shown in FIG. 8B by a driving force generated by the stator driving device 79. The first position (FIG. 8A) is a position at which the respective second teeth 94 of the second stator face the corresponding first teeth 88 of the first stator 86 squarely in directions parallel to the motor shaft 85. The second position (FIG. 8B) is a position at which the respective second teeth 94 of the second stator 87 face intermediate positions of pairs of adjacent first teeth 88 of the first stator 86 and do not face any of the first teeth 88 squarely.

As shown in FIG. 8A, when the second stator 87 is positioned at the first position, the first and second teeth 88 and 94 face each other across large areas, a gap G1 in between the teeth is small, and the magnetic resistance at the gap G1 is low. The magnetic field of the stator 82 is thereby put in a maximized state. In the state where the gap G1 is small, a strong magnetic flux M1 is generated in the electric motor 5. The magnetic flux M1 passes through the rotor core 83 of the rotor 81, the first teeth 88, the second teeth 94, and the yoke 93 of the second stator 87. By the generation of the strong magnetic flux M1, the electric motor 5 can generate an output that is low in rotation speed but high in torque. The motor controller 78 is arranged to control the position of the second stator 87 so that the strong magnetic flux M1 is generated when the two-wheeled electric vehicle 1 is started from a stopped state or is climbing a sloping road.

On the other hand, when as shown in FIG. 8B, the second stator 87 is positioned at the second position, the first and second teeth 88 and 94 do not face each other squarely and the magnetic resistance at the gap G1 in between the teeth is large. The magnetic field of the stator 82 is thereby put in a minimized state. In the state where the gap G1 is large, a magnetic flux M2 that is weaker than the magnetic flux M1 is generated in the electric motor 5. The magnetic flux M2 is formed in a periphery of the rotor core 83 of the rotor 81 and the first teeth 88, and does not pass through the second stator 87. By the generation of the weak magnetic flux M2, the electric motor 5 can generate an output that is low in torque but high in rotation speed. The motor controller 78 is arranged to control the position of the second stator 87 so that the magnetic flux M2 is generated when the two-wheeled electric vehicle 1 is traveling at a constant speed on a flat road, etc.

By thus changing the magnitude of the magnetic field of the stator 82, the electric motor 5 is enabled to generate an output that is in accordance with the traveling state of the two-wheeled electric vehicle 1.

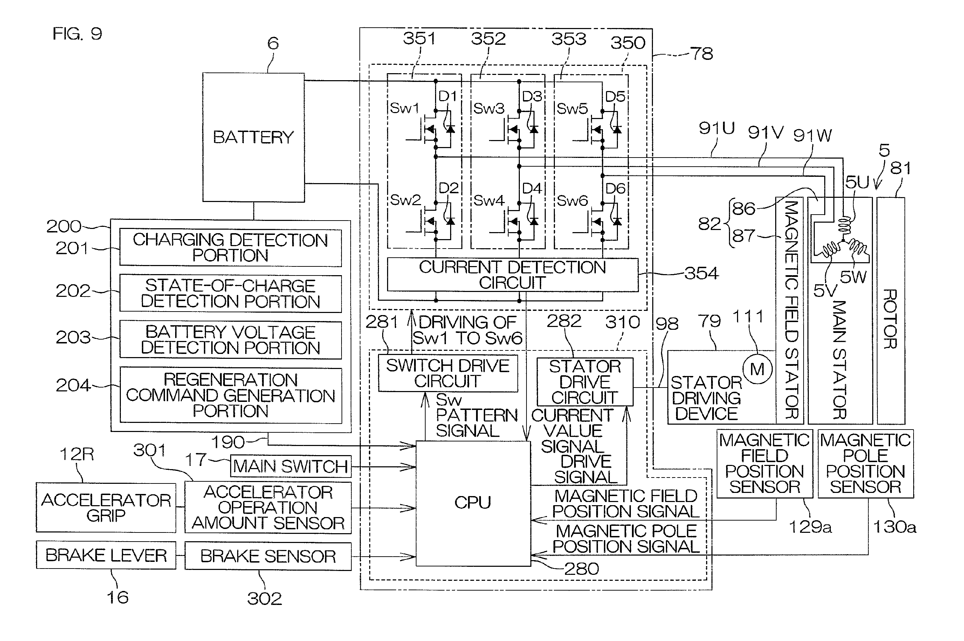

FIG. 9 is a block diagram of an electrical arrangement related to the control of the electric motor 5 and the stator driving device 79. As mentioned above, the electric motor 5 includes the stator 82 and the rotor 81 that faces the stator 82. The stator 82 includes the first stator 86 (main stator) and the second stator 87 (magnetic field stator) that rotates relative to the first stator 86 within a predetermined angular range. The rotation position of the second stator 87 is detected by the magnetic field position sensor 129a. The output signal (magnetic field position signal) of the magnetic field position sensor 129a is input into the motor controller 78. On the other hand, the magnetic pole positions of the rotor 81 are detected by the magnetic pole position sensors 130a. The output signals (magnetic pole position signals) of the magnetic pole position sensors 130a are input into the motor controller 78.

The motor controller 78 is connected to the battery 6. Also, the motor controller 78 is connected to the electric motor 5 via the feeders 91U, 91V, and 91W, and is connected to the drive motor 111 via a feeder 98.
An output signal of a main switch 17, an output signal of an accelerator operation amount sensor 301, and an output signal of a brake sensor 302 are also input into the motor controller 78. The main switch 17 is a switch that is operated to be on by a user when use of the two-wheeled electric vehicle 1 is started and is operated to be off by the user at the end of use. The accelerator operation amount sensor 301 outputs an accelerator opening signal, which is in accordance with the amount of operation of the accelerator grip 12R (the grip 12 at the right side) by the rider, as accelerator information to the motor controller 78. The accelerator operation amount sensor 301 may include, for example, a variable resistor that changes in electrical resistance value in accordance with the accelerator operation, and may be arranged to output the voltage across opposite ends of the variable resistor as the accelerator opening signal. The brake sensor 302 is arranged to detect whether or not either of the right and left brake levers 16 is operated by the rider (operation or non-operation of the brake). For example, the brake sensor 302 may be arranged to detect operation of the brake when a displacement amount of the brake lever 16 is not less than a predetermined threshold (or exceeds the threshold) and to detect non-operation of the brake otherwise.

Further, the motor controller 78 is arranged to perform information communication via a communication line 190 with a battery controller 200 that controls charging/discharging of the battery 6. The battery controller 200 includes a charging detection portion 201 for detecting whether or not charging of the battery 6 is being performed, a state-of-charge detection portion 202 for detecting a state of charge (SOC) of the battery 6, and a battery voltage detection portion 203 for detecting a voltage VB of the battery 6. The battery controller 200 further includes a regeneration command generation portion 204 for generating a regeneration command in accordance with the state of charge provided by the state-of-charge detection portion 202. The regeneration command is a command expressing that a regenerative current generated by the electric motor 5 should be supplied to the battery 6. A portion or all of the charging detection portion 201, state-of-charge detection portion 202, battery voltage detection portion 203, and regeneration command generation portion 204 may be functional processing units realized by execution of a program by a computer included in the battery controller 200.

The motor controller 78 includes the control circuit 310 and the motor drive circuit 350.
The control circuit 310 includes a CPU 280, a switch drive circuit 281, and a stator drive circuit 282. Also, although not shown, the control circuit 310 includes a ROM storing operation programs of the CPU 280, maps necessary for control operations, etc., and a RAM used for temporary storage of calculation data, etc. An actuation signal of the main switch 17, the output signal of the accelerator operation amount sensor 301, a data signal from the battery controller 200, the output signals of the magnetic pole position sensors 130a, the output signal of the magnetic field position sensor 129a, etc., are input via an appropriate interface into the CPU 280. The CPU 280 controls the switch drive circuit 281 and the stator drive circuit 282 in accordance with these input signals. The switch drive circuit 281 generates drive signals for driving switching elements included in the motor drive circuit 350. Also, the stator drive circuit 282 supplies driving electric power to the drive motor 111 of the stator driving device 79.

The motor drive circuit 350 is a DC/AC convertor circuit (inverter circuit) that converts the DC voltage generated by the battery 6 to an AC voltage and supplies it to the electric motor 5. More specifically, the motor drive circuit 350 includes a U-phase circuit 351, a V-phase circuit 352, and a W-phase circuit 353. The U-phase circuit 351, V-phase circuit 352, and W-phase circuit 353 are connected in parallel to each other with respect to the battery 6.

The U-phase circuit 351 is a series circuit of an upper arm switching element Sw1 and a lower arm switching element Sw2. The V-phase circuit 352 is a series circuit of an upper arm switching element Sw3 and a lower arm switching element Sw4. The W-phase circuit 353 is a series circuit of an upper arm switching element Sw5 and a lower arm switching element Sw6. The switching elements Sw1 to Sw6 are arranged, for example, from power devices, such as power MOSFETs, etc., and the respective gates thereof are supplied with the drive signals from the switch drive circuit 281. The switching elements Sw1 to Sw6 are thereby driven to be on or off. Diodes D1 to D6 are connected in parallel to the switching elements Sw1 to Sw6, respectively. Each of the diodes D1 to D6 may be a diode (for example, a parasitic diode) incorporated in the power MOSFET or other switching element or may be a diode that is connected in parallel outside the element.

In each phase circuit, the feeder of the corresponding phase is connected between the upper arm switching element and the lower arm switching element. That is, the U-phase feeder 91U is connected between the upper arm switching element Sw1 and the lower arm switching element Sw2 of the U-phase circuit. The V-phase feeder 91V is connected between the upper arm switching element Sw3 and the lower arm switching element Sw4 of the V-phase circuit 352. Further, the W-phase feeder 91W is connected between the upper arm switching element Sw5 and the lower arm switching element Sw6 of the W-phase circuit 353. The U-phase feeder 91U is connected to U-phase coils 5U of the electric motor 5, the V-phase feeder 91V is connected to V-phase coils 5V of the electric motor 5, and the W-phase feeder 91W is connected to W-phase coils 5W of the electric motor 5.

The motor drive circuit 350 includes a current detection circuit 354 for detecting the currents of the respective phases. The current detection circuit 354 is arranged to detect the currents flowing through the lower arm switching elements Sw2, Sw4, and Sw6 of the respective phases and to input detection signals (current value signals) expressing the directions and magnitudes of the currents into the control circuit 310. That is, the current detection circuit 354 outputs the detection values of the U-phase current I_{U}, the V-phase current), and the W-phase current I_{W}. These phase current detection values are input into the CPU 280.

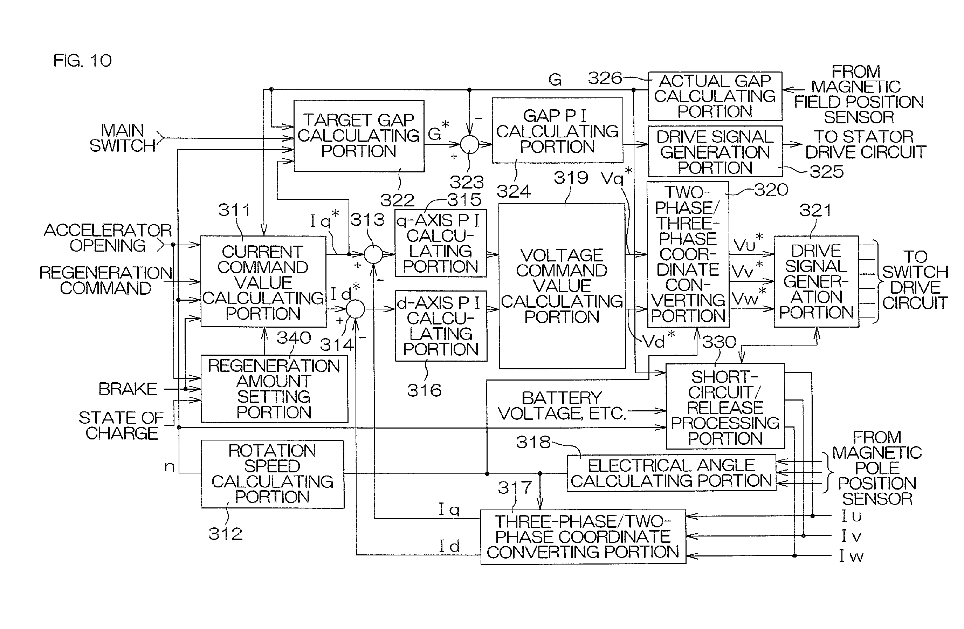

FIG. 10 is a block diagram for describing functions of the CPU 280. The CPU 280 is arranged to function as a plurality of functional processing units by executing the operation programs. The plurality of functional processing units include a current command value calculating portion 311, a rotation speed calculating portion 312, a q-axis current deviation calculating portion 313, ad-axis current deviation calculating portion 314, a q-axis PI (proportional integral) calculating portion 315, a d-axis PI calculating portion 316, and a three-phase/two-phase coordinate converting portion 317. The plurality of functional processing units further includes an electrical angle calculating portion 318, a voltage command value calculating portion 319, a two-phase/three-phase coordinate converting portion 320, a drive signal generation portion 321, a target gap calculating portion 322, a gap difference calculating portion 323, a gap PI calculating portion 324, a drive signal generation portion 325, and an actual gap calculating portion 326. The plurality of functional processing units further includes short-circuit/release processing portion 330 and a regeneration amount setting portion 340.

The current command value calculating portion 311 calculates the accelerator opening AO (%) based on the accelerator opening signal from the accelerator operation amount sensor 301. The accelerator opening AO is a proportion of the actual accelerator operation amount with respect to a maximum value of the accelerator operation amount, that is, it may be a value expressing the proportion of the accelerator opening signal acquired by the accelerator operation amount sensor 301 with respect to the maximum value of the accelerator opening signal as a percentage.

The current command value calculating portion 311 calculates current command values (target current values) for driving the electric motor 5 based on the accelerator opening AO and the rotation speed n of the electric motor 5 calculated by the rotation speed calculating portion 312. The rotation speed calculating portion 312 may be arranged to calculate the rotation speed n of the electric motor 5 based on an electrical angle θ calculated by the electrical angle calculating portion 318. The electrical angle calculating portion 318 calculates the electrical angle θ of the electric motor 5 based on the output signals of the magnetic pole position sensors 130a.

In the present preferred embodiment, the current command value calculating portion 311 calculates current command values in a dq-axis coordinate system. A dq coordinate system is a two-phase rotating coordinate system that rotates together with the rotor 81 of the electric motor 5 and is an orthogonal coordinate system defined by a d-axis lying in the direction of the magnetic field and a q-axis orthogonal to the d-axis. The current command value calculating portion 311 calculates a q-axis current command value Iq*, which is a component that generates torque, and a d-axis current command value Id*, which is a component that weakens an induced voltage of the electric motor 5.

The q-axis current command value Iq* is calculated, for example, by multiplying a q-axis upper limit current value Iqₘₐₓ by the accelerator opening AO (Iq*= Iqₘₐₓ×AO÷100). The d-axis current command value Id* is determined by a calculation using at least one among the accelerator opening AO, the rotation speed n of the electric motor 5, and the q-axis current command value Iq* as parameter information.
The d-axis current command value Id* may, for example, be calculated by multiplying a d-axis upper limit current value Idₘₐₓ by the accelerator opening AO (Id*= Idₘₐₓ×AO÷100). Or, using the rotation speed n of the electric motor 5 as parameter information, an optimal Id* corresponding to the rotation speed n may be determined by experiment, etc. , and stored in advance as map data in the ROM, and the d-axis current command value Id* may be determined from the rotation speed n of the electrical motor 5 based on the map data. Further, an optimal Id* corresponding to the q-axis current command value Iq* as parameter information may be determined by experiment, etc., and stored in advance as map data in the ROM, and the d-axis current command value Id* may be determined from the q-axis current command value Iq* based on the map data. Also, an optimal Id* corresponding to the accelerator opening AO and the q-axis current command value Iq* as parameter information may be determined by experiment, etc., and stored in advance as three-dimensional map data in the ROM, and the d-axis current command value Id* may be determined from the accelerator opening AO and the q-axis current command value Iq* based on the three-dimensional map data. The d-axis current command value Id* may be set equal to zero (Id*=0) constantly regardless of the information of the accelerator opening AO, the rotation speed n of the electric motor 5, and the q-axis current command value Iq*.

On the other hand, when a regeneration command is provided from the battery controller 200 (see FIG. 9) when the accelerator opening AO is zero and when a brake operation is detected, the current command value calculating portion 311 sets the q-axis current command value Iq* to a negative value. In this case, the q-axis current command value Iq* may be determined in accordance with the state of charge (SOC) and the battery voltage VB provided from the battery controller 200. Also, during high speed rotation, the d-axis current command value Id* may be set to a negative value to perform field-weakening control.

The regeneration amount setting portion 340 sets a maximum regenerative current when the accelerator opening AO is zero and when a brake operation is detected. The regenerative current is a current (battery current) that is actually returned to and used to charge the battery 6 and the maximum regenerative current is the maximum value thereof. Although there is a correlation between the regenerative current and the current command value, these are not necessarilymatched. Specifically, when the accelerator opening AO is zero and the brake sensor 302 is detecting that there is no brake operation, the regeneration amount setting portion 340 sets the maximum regenerative current to a first fixed value. Also, when the brake sensor 302 is detecting that there is a brake operation, the regeneration amount setting portion 340 sets the maximum regenerative current to a second fixed value that is greater than the first fixed value. Further, when the accelerator opening degree AO is not zero, the regeneration amount setting portion 340 sets the maximum regenerative current to zero. When the regeneration amount setting portion 340 sets the maximum regenerative current, the current command value calculating portion 311 sets the q-axis current command value Iq* and the d-axis current command value Id* so that the regenerative current is not more than (or less than) the maximum regenerative current that is set.

The current command value calculating portion 311 outputs the q-axis current command value Iq* to the q-axis current difference calculating portion 313 and outputs the d-axis current command value Id* to the d-axis current difference calculating portion 314. An actual q-axis current value Iq that actually flows through the electric motor 5 is supplied from the three-phase/two-phase coordinate converting portion 317 to the q-axis current difference calculating portion 313. The q-axis current difference calculating portion 313 calculates a difference value (Iq*-Iq) between the actual q-axis current value Iq and the q-axis current command value Iq* and outputs it to the q-axis PI calculating portion 315. Also, an actual d-axis current value Id that actually flows through the electric motor 5 is supplied from the three-phase/two-phase coordinate converting portion 317 to the d-axis current difference calculating portion 314. The d-axis current difference calculating portion 314 calculates a difference value (Id*-Id) between the actual d-axis current value Id and the d-axis current command value Id* and outputs it to the d-axis PI calculating portion 316.

The three-phase/two-phase coordinate converting portion 317 performs coordinate conversion of the actual U-phase current I_{U}, the actual V-phase current I_{V}, and the actual W-phase current I_{W} output by the current detection circuit 354 to calculate the actual q-axis current value Iq and the actual d-axis current value Id. That is, the three-phase/two-phase coordinate converting portion 317 performs a coordinate conversion from the UVW coordinate system, which is a three-phase fixed coordinate system, to the dq coordinate system, which is a two-phase rotating coordinate system. For this coordinate conversion, the three-phase/two-phase coordinate converting portion 317 uses the electrical angle θ calculated by the electrical angle calculating portion 318.

The q-axis PI calculating portion 315 performs a proportional integral calculation based on the difference value (Iq*-Iq) to calculate a control amount such that the actual q-axis current value Iq follows the q-axis current command value Iq*. Similarly, the d-axis PI calculating portion 316 performs a proportional integral calculation based on the difference value (Id*-Id) to calculate a control amount such that the actual d-axis current value Id follows the d-axis current command value Id*. The control amounts that are thus calculated are output to the voltage control value calculating portion 319 and converted to a q-axis voltage command value Vq* and a d-axis voltage command value Vd* at the voltage command value calculating portion 319.

The q-axis voltage command value Vq* and the d-axis voltage command value Vd* are output to the two-phase/three-phase coordinate converting portion 320. The two-phase/three-phase coordinate converting portion 320 uses the electrical angle θ calculated by the electrical angle calculating portion 318 to convert the q-axis voltage command value Vq* and the d-axis voltage command value Vd* to voltage command values V_{U}*, V_{V}*, and V_{W}* of the three phases. That is, the two-phase/three-phase coordinate converting portion 320 executes a coordinate conversion from the dq coordinate system, which is a two-phase rotating coordinate system, to the UVW coordinate system, which is a three-phase fixed coordinate system. The voltage command values V_{U}*, V_{V}*, and V_{W}* of the three phases are supplied to the drive signal generation portion 321. The drive signal generation portion 321 outputs duty control signals (PWM control signals) that are in accordance with the voltage command values V_{U}*, V_{V}*, and V_{W}* to the switch drive circuit 281. On/off drive of the switching elements Sw1 to Sw6 of the motor drive circuit 350 is thereby performed in accordance with the duty ratio. Driving electric power is thereby supplied at voltages that are in accordance with the voltage command values V_{U}*, V_{V}*, and V_{W}* to the electric motor 5.

A control system of the driving motor 111 of the stator driving device 79 shall now be described. The target gap calculating portion 322 calculates a target position of the second stator 87. More specifically, a target value (target gap) G* of the gap G between the first teeth 88 of the first stator 86 and the second teeth 94 of the second stator 87 is calculated. The gap G at the first position (see FIG. 8A) at which first teeth 88 and the second teeth 94 face each other squarely is defined as 0%, and the gap G at the second position (see FIG. 8B) at which the first teeth 88 and the second teeth 94 are separated the most is defined as 100%. The actual gap G and the target gap G* take on values from 0% to 100%. In the present preferred embodiment, control is performed so that the gap G and the target gap G* take on values that change in a stepwise manner from 0% to 100% (for example, at 10% intervals). Obviously, the gap G and the target gap G* may take on values that change in a continuous manner from 0% to 100%.

For example, the rotation speed n of the electric motor 5 calculated by the rotation speed calculating portion 312, the q-axis current command value Iq* calculated by the current command value calculating portion 311, the voltage VB of the battery 6, and the actual gap G calculated by the actual gap calculating portion 326 are input into the target gap calculating portion 322. Based on the input information, the target gap calculating portion 322 calculates the target gap G* and outputs it to the gap difference calculating portion 323. Also, immediately after an operation of turning on the main switch 17 is performed, the target gap calculating portion 322 sets the target gap G* to 0%. This is performed in preparation for generating a large torque that is required at the start of running of the two-wheeled electric vehicle 1. Also, when an operation of turning off the main switch 17 is performed, the target gap calculating portion 322 sets the target gap G* to 100%. This is performed to prevent the electric motor 5 from being a large load when walking while pushing the two-wheeled electric vehicle 1 is performed.

The gap difference calculating portion 323 calculates a difference value (G*-G) between the target gap G* and the actual gap G calculated by the actual gap calculating portion 326, and outputs the value to the gap PI calculating portion 324. The gap PI calculating portion 324 performs a proportional integral calculation based on the difference value (G*-G) and computes a control amount such that the actual gap G follows the target gap G*. The drive signal generation portion 325 outputs drive signals (PWM signals) of a duty ratio that is in accordance with the calculation result to the stator drive circuit 282.

The stator drive circuit 282 is connected to the battery 6 and may, for example, be an H bridge circuit that includes four switching elements made up of MOSFETs. The drive signals from the drive signal generation portion 325 are input into the gates of the respective switching elements. On/off drive of the respective switching elements is thereby performed and driving electric power is supplied at voltages that are in accordance with the duty ratio to the drive motor 111. The drive motor 111 rotates in a forward rotation direction or a reverse rotation direction in accordance with the direction of current supply to the drive motor 111.

The actual gap calculating portion 326 calculates the gap G based on the output signal from the magnetic field position sensor 129a of the stator driving device 79 and outputs it to the target gap calculating portion 322.
The short-circuit/release processing portion 330 executes three-phase short-circuiting, by which terminals of the three phases of the electric motor 5 are short-circuited, and performs releasing of the three-phase short-circuited state. The short-circuit/release processing portion 330 executes the three-phase short-circuiting when prescribed short-circuiting conditions are met based on such information as the rotation speed n calculated by the rotation speed calculating portion 312, the battery voltage VB, etc. Also, the short-circuit/release processing portion 330 releases the three-phase short-circuited state when prescribed release conditions are met when the electric motor 5 is in the three-phase short-circuited state. In executing the three-phase short-circuiting, the short-circuit/release processing portion 330 provides, to the drive signal generation portion 321, a command for putting the lower arm switching elements Sw2, Sw4, and Sw6 of all phase circuits 351, 352, and 353 of the motor drive circuit 350 in the on state. Also in releasing the three-phase short-circuited state, the short-circuit/release processing portion 330 provides, to the drive signal generation portion 321, a command for putting the lower arm switching elements Sw2, Sw4, and Sw6 of all phase circuits 351, 352, and 353 of the motor drive circuit 350 in the off state. Details of these processes shall be described later.

The three-phase short-circuited state is state in which the lower arm switching elements Sw2, Sw4, and Sw6 of all of the U-phase circuit 351, V-phase circuit 352, and W-phase circuit 353 of the motor drive circuit 350 are turned on. In this state, the terminals of the U-phase coils 5U, V-phase coils 5V, and W-phase coils 5W of the electric motor 5 are short-circuited and the electric power generated by rotation of the rotor 81 is thermally consumed by the coils 5U, 5V, and 5W. That is, the regenerative current returned from the electric motor 5 to the battery 6 is zero.

In the three-phase short-circuited state, the current flowing through the electric motor 5 impedes the rotation of the electric motor 5. That is, the electric motor 5 generates a braking torque and this braking torque acts on the two-wheeled electric vehicle 1. A braking torque that is in accordance with the regenerative current is also generated when performing the regeneration operation of returning the current generated by the electric motor 5 to the battery 6. The first fixed value set by the regeneration amount setting portion 340 corresponds to the regenerative current that generates a braking torque equivalent to the braking torque generated by the electric motor 5 in the three-phase short-circuited state.

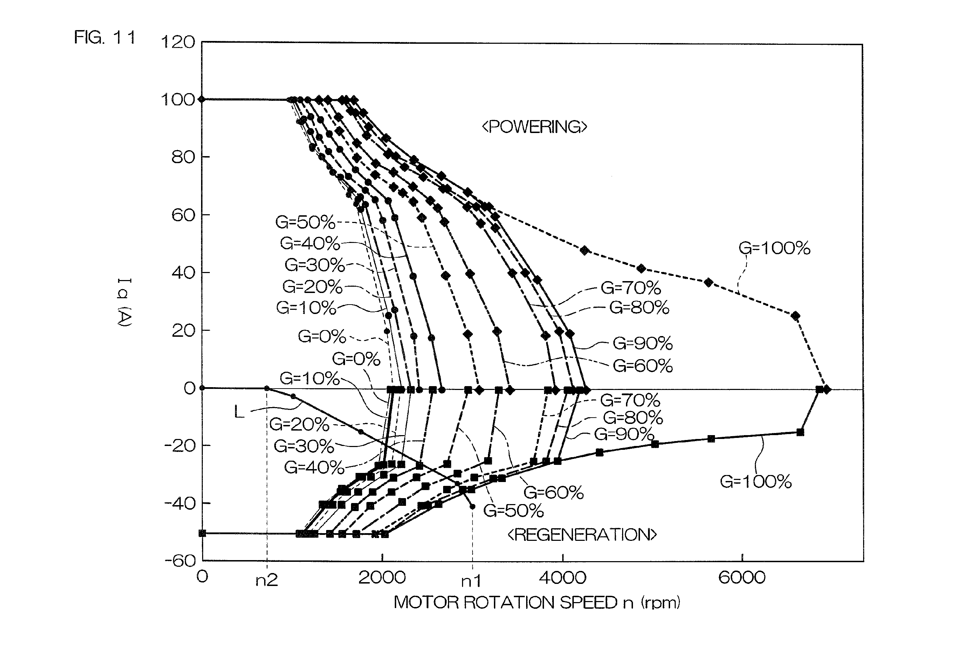

FIG. 11 is an example of a reference map for the q-axis upper limit current value Iqₘₐₓ that is the upper limit value of the q-axis current command value Iq*. The current command value calculating portion 311 determines the q-axis upper limit current value Iqₘₐₓ based on this reference map and calculates the q-axis current command value Iq* (=Iqₘₐₓ×AO÷100) based on the q-axis upper limit current value Iqₘₐₓ. The reference map is used to set the q-axis upper limit current value Iqₘₐₓ based on the rotation speed n of the electric motor 5 and the gap G. The q-axis upper limit current value Iqₘₐₓ is set according to different reference curves for cases where the gap G=0%, 10%, 20%, 30%, 40%, 50%, 60%, 70%, 80%, 90%, and 100%.

The reference curves include a set of powering reference curves with which the q-axis upper limit current value Iqₘₐₓ is set to a value not less than 0 and a set of regeneration reference curves with which the q-axis upper limit current value Iqₘₐₓ is set to a value not more than 0. The set of powering reference curves is referenced in a powering operation in which the electric motor 5 is made to act as a motor and the driving force is transmitted to the rear wheel 4. The set of regeneration reference curves are referenced in a regeneration operation where the electric motor 5 is made to act as an electric power generator and the regenerative current generated by the electric motor 5 that is rotated by a driving force transmitted from the rear wheel 4 is supplied to the battery 6.

Each of the reference curves (powering reference curves) of the set of powering reference curves is set to provide characteristics such that the q-axis upper limit current value Iqₘₐₓ is a fixed value until the rotation speed n of the electric motor 5 reaches a prescribed value and the q-axis upper limit current value Iqₘₐₓ is decreased in accordance with increase of the rotation speed n in a region exceeding the prescribed value. The greater gap G, the weaker the magnetic field of the stator 87 and therefore the more suppressed the induced voltage and the higher the speed of rotation possible.

The powering reference curve for the gap G=100% is set to characteristics extending to a high speed region. This is due to the d-axis current command value Id* being set to a negative value to perform field-weakening control when the gap G=100 o and a region in which the q-axis current can be supplied being enlarged. The present preferred embodiment is arranged so that when the gap G<100%, the d-axis current command value Id*=0 and field-weakening control is not performed. Field-weakening control may be performed when the gap G<100% as well.

On the other hand, each of the reference curves (regeneration reference curves) of the set of regeneration reference curves is set to provide characteristics such that the q-axis upper limit current value Iqₘₐₓ is a fixed value until the rotation speed n of the electric motor 5 reaches a prescribed value and the q-axis upper limit current value Iqₘₐₓ is increased (decreased in absolute value) in accordance with increase of the rotation speed n in a region exceeding the prescribed value. During the regeneration operation, the q-axis current command value Iq* is set so that the absolute value thereof is not more than the absolute value of the q-axis upper limit current value Iqₘₐₓ. The greater gap G, the weaker the magnetic field of the stator 87 and therefore the induced voltage is suppressed more and an appropriate regenerated current is obtained even when the rotation speed is high.

The regeneration reference curve for the gap G=100% is set to characteristics extending to the high speed region. This is due to the d-axis current command value Id* being set to a negative value to perform field-weakening control when the gap G=100% and a region in which the q-axis current can be supplied being enlarged. The present preferred embodiment is arranged so that when the gap G<100%, the d-axis current command value Id*=0 and field-weakening control is not performed. Field-weakening control may be performed when the gap G<100% as well.

A low speed limit reference curve L for limiting the q-axis current command value Iq* in a low speed rotation region of the electric motor 5 is also shown in FIG. 11. When in the case where the rotation speed n of the electric motor 5 is not more than a prescribed rotation speed threshold n1, the q-axis current command value Iq* determined based on a regeneration reference curve falls below a limit value on the low speed limit reference curve L, the q-axis current command value Iq* is corrected to the limit value. The low speed limit reference curve L has characteristics of decreasing in absolute value as the rotation speed n decreases and becoming zero in an extreme low speed region not more than a prescribed low speed threshold n2 (or below the low speed threshold n2). The rotation speed n is proportional to the rotation speed of the rear wheel 4 and is thus proportional to the vehicle speed of the two-wheeled electric vehicle 1. The rotation speed n calculated by the rotation speed calculating portion 312 (see FIG. 10) thus corresponds to the vehicle speed. The rotation speed threshold n1 corresponds, for example, to approximately 25km/h in terms of the vehicle speed of the two-wheeled electric vehicle 1. Also, the low speed threshold n2 corresponds, for example, to approximately 6km/h in terms of the vehicle speed of the two-wheeled electric vehicle 1. Therefore, when the two-wheeled electric vehicle 1 is coasting at a low speed, the regenerative current is suppressed and the braking torque generated by the electric motor 5 is weakened accordingly. Consequently, a braking sensation during low speed travel can be suppressed and a satisfactory riding feeling can be obtained.

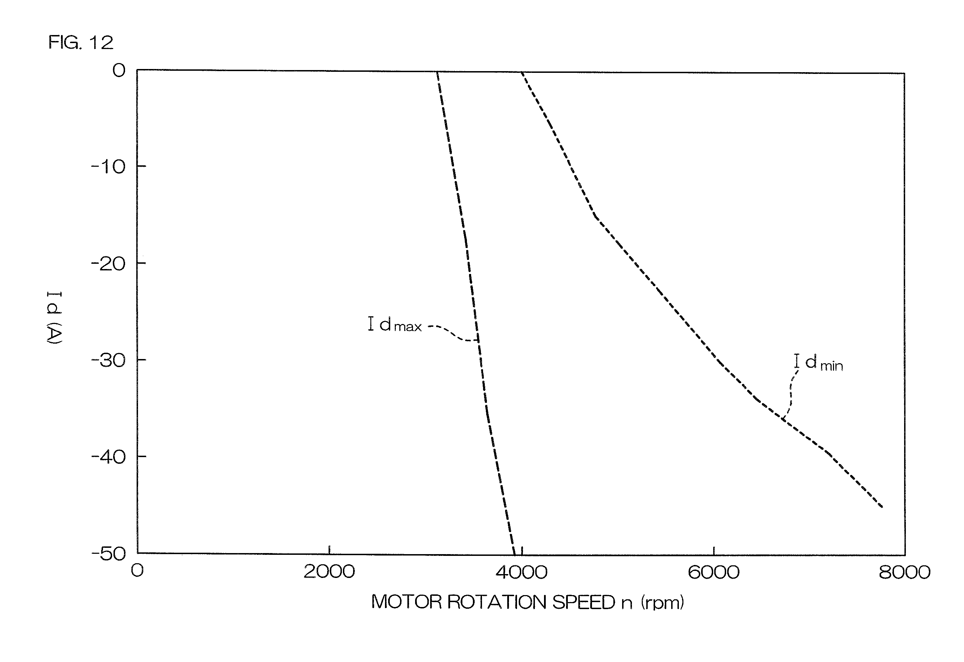

FIG. 12 is an example of a reference map for the d-axis upper limit current value Idₘₐₓ that is the upper limit value of the d-axis current command value Id* and a d-axis lower limit current value Idₘᵢₙ that is the lower limit value thereof. The current command value calculating portion 311 determines the d-axis upper limit current value Idₘₐₓ and the d-axis lower limit current value Idₘᵢₙ based on this reference map, and calculates the d-axis current command value Id* based on the d-axis upper limit current value Idₘₐₓ and the d-axis lower limit current value Idₘᵢₙ.

The present reference map is used to set the d-axis upper limit current value Idₘₐₓ and the d-axis lower limit current value Idₘᵢₙ based on the rotation speed n of the electric motor 5. More specifically, the reference map includes a d-axis upper limit curve for setting the d-axis upper limit current value Idₘₐₓ based on the rotation speed n and a d-axis lower limit curve for setting the d-axis lower limit current value Idₘᵢₙ based on the rotation speed n. Both curves are set in a region where Id<0. The d-axis current command value Id* is set to a value between the d-axis upper limit curve (Idₘₐₓ) and the d-axis lower limit curve (Idₘᵢₙ).

The d-axis upper limit curve (Idₘₐₓ) expresses a d-axis current value with which the absolute value of the q-axis current value Iq can be maximized (for example, to 100 amperes) by weakening the magnetic field. The d-axis upper limit curve (Idₘₐₓ) is determined to take on a significant value (negative value) in a region not less than a prescribed value of the rotation speed n and to decrease (increases in absolute value) in accordance with increase of the rotation speed n. The d-axis lower limit curve (Idₘᵢₙ) expresses a d-axis current value of a minimum absolute value by which the q-axis current Iq can be controlled as a significant value. The d-axis lower limit curve (Idₘᵢₙ) is determined to take on a significant value (negative value) in a region not less than a prescribed value of the rotation speed n and to decrease (increases in absolute value) in accordance with increase of the rotation speed n. By setting the d-axis current value to a value between the d-axis upper limit curve (Idₘₐₓ) and the d-axis lower limit curve (Idₘᵢₙ), an effect equivalent to weakening the magnetic field can be obtained. That is, during the powering operation, the electric motor 5 can be rotated at high speed, and, during the regeneration operation, an excessive induction voltage can be avoided even during high speed rotation.

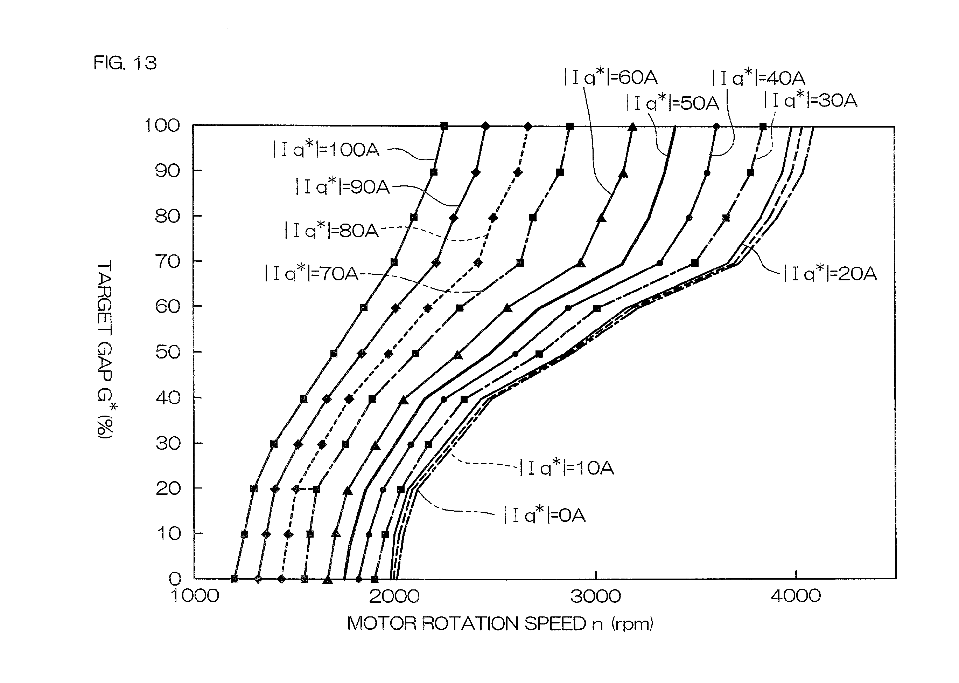

FIG. 13 shows an example of a target gap map referenced by the target gap calculating portion 322. The target gap calculating portion 322 may be arranged to set the target gap G* by referencing this target gap map. In the present example, the target gap G* is set in accordance with the absolute value |Iq*| of the q-axis current command value Iq* and the rotation speed n of the electric motor 5. The target gap map has a plurality of target gap curves respectively corresponding to cases where the absolute value |Iq*| of the q-axis current command value is equal to 0, 10, 20, 30, 40, 50, 60, 70, 80, 90, and 100 (amperes). Each target gap curve is set in characteristics so that the target gap G*=0% until the rotation speed n of the electric motor 5 reaches a certain value and so that in a region not less than the certain value, the target gap G* increases as the rotation speed n increases. The magnetic field of the stator 87 is thus made strong during low speed rotation and the magnetic field of the stator 87 is weakened during high speed rotation. Further, the characteristics are set so that the larger the absolute value |Iq*| of the q-axis current command value Iq*, the larger the target gap G* set for a low rotation speed n.

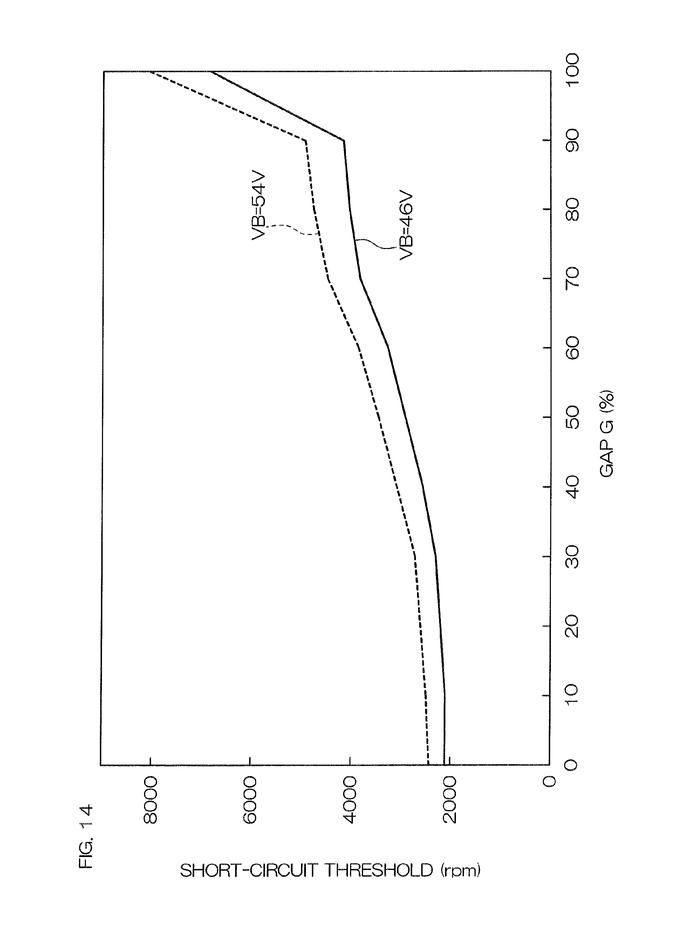

FIG. 14 shows an example of a short-circuit threshold map referenced by the short-circuit/release processing portion 330. The short-circuit/release processing portion 330 compares the rotation speed of the electric motor 5 and a short-circuit threshold and determines whether or not to execute the three-phase short-circuiting based on the comparison result. The short-circuit threshold map sets the short-circuit threshold. The short-circuit threshold map shown in FIG. 14 is set so that the short-circuit threshold is changed in accordance with the gap G between the first and second stators 86 and 87 in the stator 87. The greater the gap G, the greater the short-circuit threshold. This is because as the gap G increases, the magnetic field is weakened and the induction voltage decreases.

Curves expressing the variation of the short-circuit threshold for cases of the battery voltage VB being 46V and 54V are shown in FIG. 14. That is, the short-circuit threshold may be set to vary in accordance with the battery voltage VB. The higher the battery voltage VB, the higher the induction voltage tolerated, and the short-circuit threshold is shifted to the high rotation speed side accordingly. The short-circuit thresholds differ greatly for the case where the gap G is 90% and the case where the gap G is 100% due to field-weakening control being performed or not being performed. That is, when the gap G=100%, the d-axis current command value Id* is set to a significant value to perform field-weakening control and therefore the induction voltage is suppressed further and a higher short-circuit threshold is tolerated.

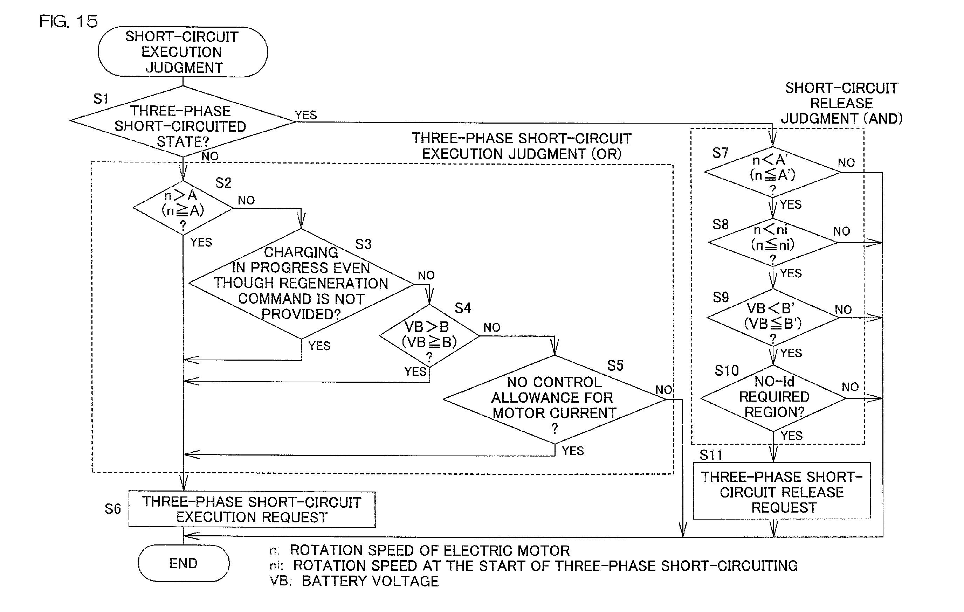

FIG. 15 is a flowchart fordescribinga short-circuit execution judgment process performed by the short-circuit/release processing portion 330. The short-circuit/release processing portion 330 (CPU 280) repeatedly executes the short-circuit execution judgment process at every predetermined control cycle. The short-circuit/release processing portion 330 first judges whether or not the present state is the three-phase short-circuited state (step S1).
If the present state is not the three-phase short-circuited state (step S1: NO), the short-circuit/release processing portion 330 judges whether or not the rotation speed n of the electric motor 5 exceeds a short-circuit threshold A (see FIG. 14) (n>A) (step S2). This judgment may be replaced by a judgment of whether or not the rotation speed n is not less than the short-circuit threshold A (n≥A). If the rotation speed n exceeds the short-circuit threshold A (or is not less than the short-circuit threshold A), the short-circuit/release processing portion 330 generates a three-phase short-circuit execution request (step S6). That is, when the rotation speed n of the electric motor S is high and there is a possibility for a large voltage to be applied to the battery 6, the three-phase short-circuiting is executed. The battery 6 is thereby protected.

If the rotation speed n does not exceed the short-circuit threshold A (or is less than the short-circuit threshold A), the short-circuit/release processing portion 330 references information provided via the communication line 190 from the battery controller 200 (step S3). More specifically, whether or not a regeneration command is provided from the battery controller 200 is checked. It is further checked whether or not charging of the battery 6 is in progress. If the regeneration command is not provided and charging is in progress (step S3: YES), the short-circuit/release processing portion 330 generates the three-phase short-circuit execution request (step S6). Although the judgment in step S3 is generally not positive, there is a possibility for the judgment in step S3 to be positive due to lagging of control, for example, during sudden acceleration, sudden deceleration, no-load rotation (when the rear wheel is rotated idly in a state where a kickstand is deployed), etc.

If the judgment in step S3 is negative, the short-circuit/release processing portion 330 further judges whether or not the battery voltage VB exceeds a short-circuit threshold voltage B (VB>B) (step S4). This judgment may be replaced by a judgment of whether or not the battery voltage VB is not less than the short-circuit threshold voltage B (VB≥B). If the judgment in step S4 is positive, the short-circuit/release processing portion 330 generates the three-phase short-circuit execution request (step S6). Supplying of the regenerative current to the battery 6 when the battery 6 is in a state close to being fully charged can thereby be avoided. The short-circuit threshold voltage B may be the battery voltage value when the battery 6 is charged to the charging limit or may be a value slightly less than the charging limit.

If the judgment in step S4 is negative, the short-circuit/release processing portion 330 further judges whether or not there is allowance for control of the motor current (step S5). Specifically, when the drive signal generation portion 321 is generating drive signals of a duty ratio of 100% and the q-axis current difference (Iq*-Iq) is a negative value, it is judged that there is no control allowance and otherwise it is judged that there is control allowance. If the judgment in step S5 is positive, the short-circuit/release processing portion 330 generates the three-phase short-circuit execution request (step S6). The rotation speed n of the electric motor 5 can thereby be maintained within an appropriate range, and restoration to a normal state with control allowance can be induced. If the judgment in step S5 is negative, the three-phase short-circuiting judgment process in the present control cycle is ended.

The conditions judged in steps S2 to S5 are examples of conditions (short-circuiting conditions) for executing three-phase short-circuiting. In the present preferred embodiment, the three-phase short-circuit execution request is generatedwhen at least one of the short-circuiting conditions is met. However, one or two or more of the short-circuiting conditions may be omitted. For example, just the short-circuiting condition related to the rotation speed n (step S2) may be judged. Also, just the two short-circuiting conditions of the short-circuiting condition related to the rotation speed n (step S2) and the short-circuiting condition related to the battery voltage VB (step S5) may be used.

On the other hand, if the present state is the three-phase short-circuited state (step S1: YES), the three-phase short circuit releasing judgment (step S7 to S10) is performed.
Specifically, the short-circuit/release processing portion 330 judges whether or not the rotation speed n of the electric motor 5 is less than a release threshold A' (=A-α; where α is a constant not less than 0; for example, α is approximately 500rpm) (step S7). This judgment may be replaced by a judgment of whether or not the rotation speed n is not more than the release threshold A' (n≤A). By setting so that A>A' (α>0), a hysteresis characteristic can be provided in the execution and release of three-phase short-circuiting, and control can thereby be stabilized.

Also, theshort-circuit/releaseprocessing portion 330 judges whether or not the rotation speed n of the electric motor 5 is less than the rotation speed nᵢ when the three-phase short-circuiting was started (n<nᵢ) (step S8). This judgment may be replaced by a judgment of whether or not the rotation speed n is not more than the rotation speed nᵢ when the three-phase short-circuiting was started (n≤nᵢ).
Further, the short-circuit/release processing portion 330 judges whether or not the voltage VB of the battery 6 is less than a release threshold voltage B' (=B-β; where β is a constant greater than 0; for example, is approximately 1V) (VB<B') (step S9). This judgment may be replaced by a judgment of whether or not the voltage VB of the battery 6 is not more than the release threshold voltage B' (VB≤B'). By setting so that B>B' (β>0), a hysteresis characteristic can be provided in the execution and release of three-phase short-circuiting and control can thereby be stabilized.

Further, the short-circuit/release processing portion 330 judges whether or not the present control region is a control region (no-Id required region) in which field-weakening control is not required (step S10). A control region in which field-weakening control is not required is a region in which the d-axis current command value Id* is maintained at zero. More specifically, in each of the powering reference curves shown in FIG. 11 besides that for the gap G being 100%, the region of rotation speed not more than the rotation speed n at which the q-axis upper limit current value Iqₘₐₓ is zero is a control region in which field-weakening control is not required. Whether or not field-weakening control is not required is thus judged based on the gap G and the rotation speed n.

If the judgment at any of the steps S7 to S10 is negative, the three-phase short-circuiting judgment process in the present control cycle is ended. On the other hand, if the judgments at all of the steps S7 to S10 are positive, the short-circuit/release processing portion 330 generates the three-phase short-circuit release request (step S11).
The conditions judged in steps S7 to S10 are examples of conditions (releasing conditions) for releasing the three-phase short circuit. In the present preferred embodiment, the three-phase short-circuit release request is generated when all of the releasing conditions given as examples are met. However, one or two or more of the short-circuiting conditions may be omitted. For example, just the releasing condition related to the rotation speed n (step S7) may be judged. Also, just the two releasing conditions of the releasing condition related to the rotation speed n (step S7) and the releasing condition related to the battery voltage VB (step S9) may be used.

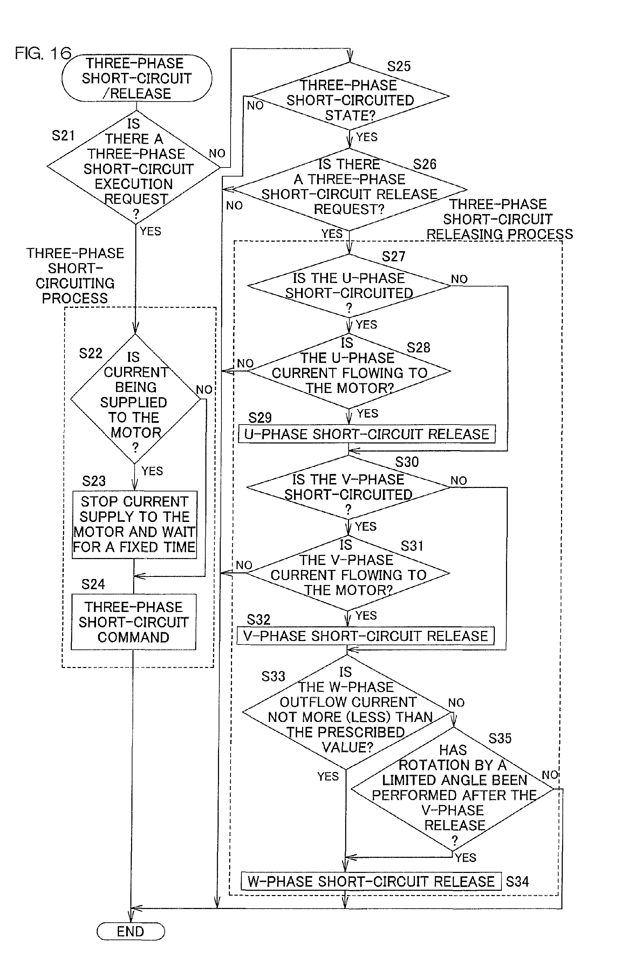

FIG. 16 is a flowchart for describing the three-phase short-circuiting process and the releasing process therefor. This process is repeatedly executed by the short-circuit/release processing portion 330 (CPU280)atevery predetermined control cycle.
The short-circuit/release processing portion 330 judges whether or not there is a three-phase short-circuit execution request (step S21). If there is a three-phase short-circuit execution request (step S21: YES), the short-circuit/release processing portion 330 judges whether or not current is being supplied to the electric motor 5 (step S22). More specifically, whether or not current is being supplied is judged based on the duty ratio of the drive signals supplied to the motor drive circuit 350. If current is not being supplied (step S22: NO), the short-circuit/release processing portion 330 provides a three-phase short-circuiting command to the drive signal generation portion 321 (step S24). In response to this, the drive signal generation portion 321 generates drive signals for keeping the upper arm switching elements Sw1, Sw3, and Sw5 in all phase circuits 351 to 353 of the motor drive circuit 350 in the off state and keeping the lower arm switching elements Sw2, Sw4, and Sw6 in the on state. The electric motor 5 is thereby put in the three-phase short-circuited state.

On the other hand, if current is being supplied to the electric motor 5 (step S22: YES), the short-circuit/release processing portion 330 provides a current supply stopping command to the drive signal generation portion 321 and waits for a fixed time until the supplying of current is actually stopped (step S23). Thereafter, the short-circuit/release processing portion 330 provides the three-phase short-circuiting command to the drive signal generation portion 321 (step S23). While current is being supplied, on/off drive of the upper arm switching elements Sw1, Sw3, and Sw5 of the motor drive circuit 350 is being performed. If the lower arm switching elements Sw2, Sw4, and Sw6 are turned on in this state to perform three-phase short-circuiting, the positive terminal and the negative terminal of the battery 6 are short-circuited and a large penetrative current may flow. By the process of step S23, short-circuiting across the terminals of the battery 6 can be avoided because the three-phase short-circuiting can be executed after the upper arm switching elements Sw1, Sw3, and Sw5 are turned off completely.

If there is no three-phase short-circuit execution request (step S21: NO), the short-circuit/release processing portion 330 judges whether or not the electric motor 5 is in the three-phase short-circuited state (step S25). If the motor is not in the three-phase short-circuited state (step S25: NO), the process of the present control cycle is ended. If the motor is in the three-phase short-circuited state (step S25: YES), the short-circuit/release processing portion 330 judges whether or not there is a three-phase short-circuit release request (step S26). If there is no three-phase short-circuit release request (step S26: NO), the process of the present control cycle is ended. If there is a three-phase short-circuit release request (step S26: YES), the three-phase short-circuiting releasing process (step S27 to S35) is executed.

The three-phase short-circuiting releasing process includes a U-phase short-circuit release (step S27 to S29), a V-phase short-circuit release (step S30 to S32), and a W-phase short-circuit release (step S33 to S35). In the present preferred embodiment, the U-phase short-circuit release, the V-phase short-circuit release, and the W-phase short-circuit release are executed in that order. Therefore, first, the lower arm switching element Sw2 of the U-phase circuit 351 is switched from the on state to the off state. The lower arm switching element Sw4 of the V-phase circuit 352 is then switched from the on state to the off state. Thereafter, the lower arm switching element Sw6 of the W-phase circuit 353 is switched from the on state to the off state.

The U-phase short-circuit release includes a judgment of whether or not the U-phase is short-circuited (step S27). This judgment is a judgment of whether or not the lower arm switching element Sw2 of the U-phase circuit 351 is in the on state. Further, the short-circuit/release processing portion 330 references the U-phase current I_{U} detected by the current detection circuit 354 to judge whether or not the value of the U-phase current I_{U} is of a direction of flowing into the electric motor 5 (step S28). "Direction of flowing into" is the direction of current flowing from the lower arm switching elements toward the electric motor 5. The direction of current that oppositely flows from the electric motor 5 to the lower arm switching elements shall be referred to as "direction of flowing out from" or "direction of outflow from," etc. For example, each of the phase currents may be expressed with a positive sign when it is of the direction of flowing into the electric motor 5 and may be expressed with a negative sign when it is of the direction of flowing out from the electric motor 5. In this case, the judgment of step S28 is a judgment of whether or not the U-phase current I_{U} is positive (or not less than 0). If the U-phase current I_{U} is of the direction of outflow from the electric motor 5 (step S28: NO), the process of the present control cycle is ended. If the U-phase current I_{U} is of the direction of flowing into the electric motor 5 (step S28: YES), the short-circuit/release processing portion 330 provides a U-phase short-circuit releasing command to the drive signal generation portion 321 (step S29). The drive signal generation portion 321 thus generates the drive signal for switching the lower arm switching element Sw2 of the U-phase circuit 351 from on to off. The U-phase short circuit is thereby released.

The V-phase short-circuit release (step S30 to S32) is similar to the U-phase short-circuit release. That is, the V-phase short-circuit release includes a judgment of whether or not the V-phase is short-circuited (step S30). This judgment is a judgment of whether or not the lower arm switching element Sw4 of the V-phase circuit 351 is in the on state. Further, the short-circuit/release processing portion 330 references the V-phase current I_{V} detected by the current detection circuit 354 to judge whether or not the value of the V-phase current I_{V} is of the direction of flowing into the electric motor 5 (step S31). This judgment may be a judgment of whether or not the V-phase current I_{V} is positive (or not less than 0). If the V-phase current I_{V} is of the direction of outflow from the electric motor 5 (step S31: NO), the process of the present control cycle is ended. If the V-phase current I_{V} is of the direction of flowing into the electric motor 5 (step S31: YES), the short-circuit/release processing portion 330 provides a V-phase short-circuit releasing command to the drive signal generation portion 321 (step S32). The drive signal generation portion 321 thus generates the drive signal for switching the lower arm switching element Sw4 of the V-phase circuit 352 from on to off. The V-phase short circuit is thereby released.

For the W-phase short-circuit release, the short-circuit/release processing portion 330 references the W-phase current I_{W} detected by the current detection circuit 354 and judges whether or not the W-phase current I_{W} outflowing from the electric motor 5 is not more than a prescribed value (or less than the prescribed value) (step S33). When a positive sign is provided to a current value in the direction of flowing into the electric motor 5, the judgment of step S33 may be a judgment of whether or not the W-phase current I_{W} is not less than a negative prescribed value. If the W-phase current I_{W} outflowing from the electric motor 5 is not more than the prescribed value (step S33: YES), the short-circuit/release processing portion 330 provides a W-phase short-circuit releasing command to the drive signal generation portion 321 (step S34). The drive signal generation portion 321 thus generates the drive signal for switching the lower arm switching element Sw6 of the W-phase circuit 353 from on to off. The W-phase short circuit is thereby released. If the W-phase current I_{W} outflowing from the electric motor 5 exceeds the prescribed value (or is not less than the prescribed value) (step S33: NO), the short-circuit/release processing portion 330 further judges whether or not the rotor has been rotated by just a predetermined fixed rotation angle (which may be an electrical angle) since the V-phase short circuit has been released (step S35). The fixed rotation angle is set to a value (for example, 90 degrees) at which the W-phase current I_{W}, outflowing from the electric motor 5, is estimated to become not more than the prescribed value since the release of the V-phase short circuit. If rotation by just the fixed rotation speed has been performed (step S35: YES), the short-circuit/release processing portion 330 provides the W-phase short-circuit release command to the drive signal generation portion 321 (step S32). If rotation by the fixed rotation angle has yet to be performed (step S35: NO), the process of the present control cycle is ended.

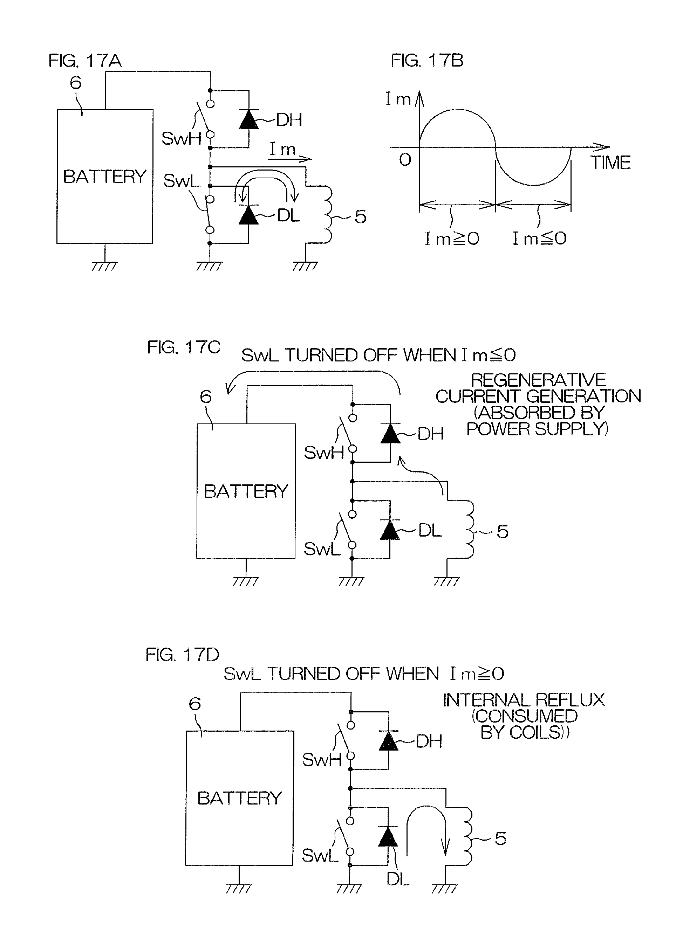

FIGS. 17A to 17D are principle diagrams for describing timings of releasing the short-circuited states of the respective phases. As shown in FIG. 17A, the battery 6 is connected to a series circuit of the upper arm switching elements SwH (Sw1, Sw3, Sw5) and the lower arm switching elements SwL (Sw2, Sw4, Sw6). The diodes DH (D1, D3, D5) are connected in parallel to the upper arm switching elements SwH, and the diodes DL (D2, D4, D6) are connected in parallel to the lower arm switching elements SwL.

In the short-circuited state, the lower arm switching elements SwL are in the on state, and as shown in FIG. 17B, a phase current Im generated in accordance with the rotation of the rotor 81 changes in the form of an alternating wave. There is thus present a period (positive value period) in which the phase current Im flows into the coils of the electric motor 5 and a period (negative value period) in which the phase current Im outflows from the coils of the electric motor 5. The phase current Im flows through the lower arm switching elements SwL in the on state and are not directed toward the battery 6 from the upper arm switching elements SwH or the diodes DH. The phase current Im is thus thermally consumed by the coils of the electric motor 5.

When the lower arm switching elements SwL are turned off and the short-circuited state is released during a period in which the phase current Im flows out from the electric motor 5 (period in which Im<0), the phase current flows through the diodes DH at the upper arm side and flows into and is absorbed by the battery 6 as shown in FIG. 17C.
On the other hand, when the lower arm switching elements SwL are turned off and the short-circuited state is released during a period in which the phase current Im flows into the electric motor 5 (period in which Im>0), the phase current flows through the diodes DL at the lower arm side and flows into the electric motor 5 as shown in FIG. 17D. The phase current thus does not flow toward the battery 6.

Therefore if the lower arm switching elements SwL are turned off and the short-circuited state is released during a period in which the phase current Im flows into the electric motor 5 (see FIG. 17D), an inrush current does not arise because the regenerative current does not flow into the battery 6. Also, even during the period in which the phase current Im is flowing out from the electric motor 5, if the lower arm switching elements SwL are turned off and the short-circuited state is released when the absolute value of the phase current is not more than the prescribed value, flowing of a large inrush current into the battery 6 can be avoided.

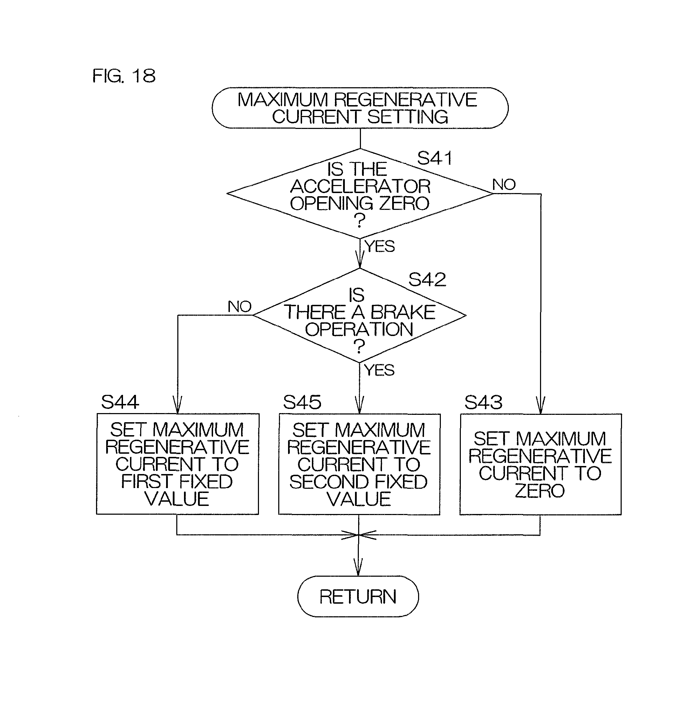

FIG. 18 is a flowchart of a process of the regeneration amount setting portion 340 and shows the process that is executed repeatedly by the CPU 280 (regeneration amount setting portion 340) at every predetermined control cycle. The regeneration amount setting portion 340 judges whether or not the accelerator opening AO is zero (step S41). The regeneration amount setting portion 340 further judges whether or not the brake sensor 302 is detecting that there is a brake operation (step S42).

If the accelerator opening AO is zero (step S41: YES) and the brake sensor 302 is detecting that there is no brake operation (step S42: NO), the regeneration amount setting portion 340 sets the maximum regenerative current to the first fixed value (step S44). The first fixed value is set in advance to generate a braking torque substantially equivalent to the braking torque generated in the electric motor 5 in the three-phase short-circuited state.

If the accelerator opening AO is zero (step S41: YES) and the brake sensor 302 is detecting that there is a brake operation (step S42: YES), the regeneration amount setting portion 340 sets the maximum regenerative current to the second fixed value (for example, of 17A) that is greater than the first fixed value (step S44). For example, the first fixed value may be of a value that is approximately 35% to 50% (for example, 40%) of the second fixed value.

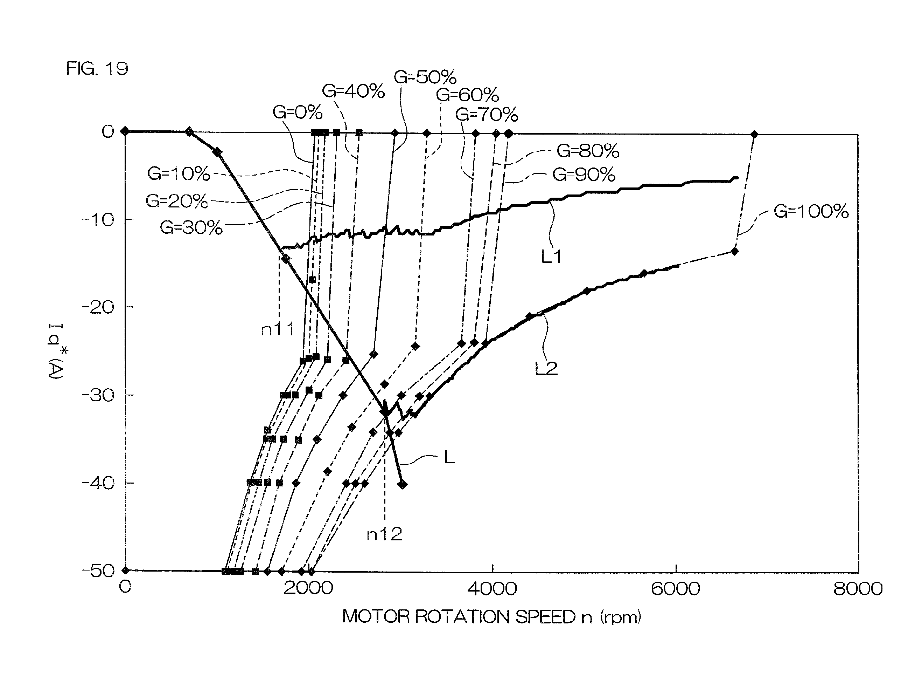

If the accelerator opening AO is not zero (step S41: NO), the regeneration amount settingportion 340 sets the maximum regenerative current to zero (step S43). FIG. 19 shows a relationship between the rotation speed n of the electric motor 5 and the q-axis current command value Iq* (regenerative current command value) during a regeneration operation. By setting the q-axis current command value Iq* to a negative value, the electric motor 5 can be made to act as a power generator, and the current generated thereby can be supplied (returned) to the battery 6. The q-axis current command value Iq* during the regeneration operation is set in accordance with the limits placed by the reference map (FIG. 11) for the q-axis upper limit current value Iqₘₐₓ and the maximum regenerative current set by the regeneration amount setting portion 340, and is set so as to be maximized in absolute value within these limiting ranges. The set of regeneration reference curves and the low speed limit reference curve L shown in FIG. 11 are also shown in FIG. 19.

When the maximum regenerative current is set to the first fixed value, the q-axis current command value Iq* is set, for example, in accordance with a curve L1. Also, when the maximum regenerative current is set to the first fixed value, the q-axis current command value Iq* is set, for example, in accordance with a curve L2. However, this does not mean that a reference map corresponding to the curves L1 and L2 is prepared. That is, the q-axis current command value Iq* is in accordance with the curve L1 or L2 as a result of the gap G in the stator 87, the q-axis current Iq, and the d-axis current Id being controlled with the maximum regenerative current being the control target.

In ranges of not more than rotation speeds n11 and n12 (or less than the rotation speeds n11 and n12) corresponding to intersections with the low speed limit reference curve L, the curves L1 and L2 match the low speed limit reference curve L. Therefore, when the maximum regenerative current is set to the first fixed value, the regenerative current is controlled with the first fixed value as the control target in the rotation speed range of exceeding the rotation speed n11 (or of not less than the rotation speed n11). In the range of not more than the rotation speed n11 (or less than the rotation speed n11), the regenerative current is suppressed and the braking torque generated by the electric motor 5 is suppressed accordingly. Similarly, when the maximum regenerative current is set to the second fixed value, the regenerative current is controlled with the second fixed value as the control target in the rotation speed range of exceeding the rotation speed n12 (or of not less than the rotation speed n12). In the range of not more than the rotation speed n12 (or less than the rotation speed n12), the regenerative current is suppressed and the braking torque generated by the electric motor 5 is suppressed accordingly. The braking sensation can thereby be suppressed in the low speed range and a satisfactory riding feeling is realized. In particular, with a lower rotation speed n of the electric motor 5, that is, with a lower vehicle speed, the regenerative current is more suppressed, the braking torque is more suppressed, and therefore a better riding feeling is obtained. For example, when performing a U-turn at low speed, an excellent riding feeling can be realized while making the regeneration operation be performed.

When the accelerator opening AO is zero and the brake operation is not performed, the maximum regenerative current is set to the first fixed value and therefore the q-axis current command value Iq* is set in accordance with the curve L1. Also, when the accelerator opening AO is zero and the brake operation is being performed, the maximum regenerative current is set to the second fixed value. That is, the q-axis current command value Iq* is set in accordance with the curve L2. Therefore, when the brake operation is being performed, the electric motor 5 generates a greater current than when the brake operation is not being performed and the current is returned to the battery 6. Therefore when the brake operation is being performed, the electric motor 5 is made to generate a large braking torque and much of the energy generated by the braking can be used for charging the battery 6. The energy utilization efficiency can thereby be improved. On the other hand, when the accelerator opening AO is zero and the brake operation is not being performed, the braking torque generated by the electric motor 5 is suppressed and therefore a natural riding feeling can be realized.

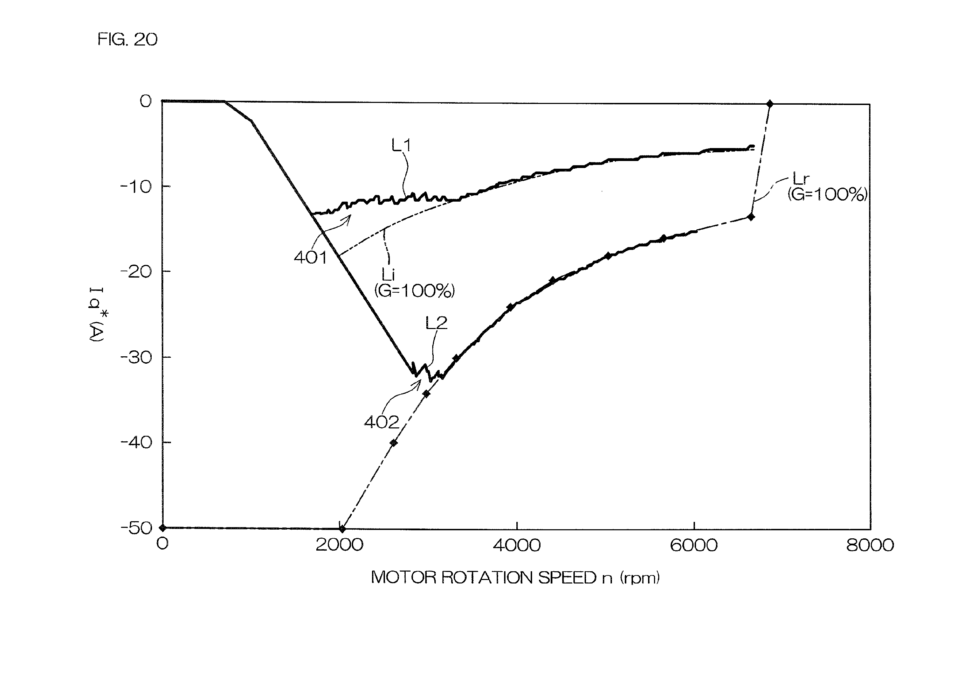

FIG. 20 is a diagram for describing an effect of control of the gap G during regeneration and shows a relationship between the rotation speed n of the electric motor 5 and the q-axis current command value Iq* (regenerative current command value) during the regeneration operation. The curves L1 and L2 shown in FIG. 19 are shown again in FIG. 20. Also, a regeneration reference curve Lr corresponding to the gap G=100% (accelerator on) is shown in FIG. 20. Further, a hypothetical regeneration reference curve Li obtained by multiplying the regeneration reference curve Lr for the gap G=100% by a ratio of the first fixed value and the second fixed value (first fixed value/second fixed value) is shown in FIG. 20.

The curve L2 expressing the q-axis current command value Iq* when the brake operation is performed lies along the regeneration reference curve Lr in a high rotation speed range. As indicated by a reference symbol 402, in the rotation speed range at which the gap G≠100%, the q-axis current command value Iq* shown by the curve L2 takes on a smaller absolute value than the value on the regeneration reference curve Lr. Also, the curve L1 expressing the q-axis current command value Iq* when the accelerator opening AO becomes zero without accompanying the brake operation lies along the hypothetical regeneration reference curve Li in the high rotation speed range. As indicated by a reference symbol 401, in the rotation speed range at which the gap G≠100%, the q-axis current command value Iq* shown by the curve L1 takes on a smaller absolute value than the value on the hypothetical regeneration reference curve Li. By the gap G thus varying in accordance with the rotation speed n, etc. , the q-axis current command value Iq* is suppressed to have an absolute value less than the value on the regeneration reference curve Lr or the hypothetical regeneration reference curve Li. The braking torque generated by the electric motor 5 can thereby be suppressed while securing a sufficient regenerative current (for example, of the first fixed value or the second fixed value).

The regenerative current is not necessarily set to the maximum regenerative current (the first fixed value or the second fixed value) at all times but is determined to be within a range of not more than the maximum regenerative current (or less than the maximum regenerative current). For example, the regenerative current may be determined to be within a range of not more than the maximum regenerative current (or less than the maximum regenerative current) in accordance with such parameters as the charging state of the battery 6, the temperature of the battery 6 (which may be substituted by the ambient temperature), etc. The q-axis current command value Iq* during the regeneration operation is determined based on the determined regenerative current.

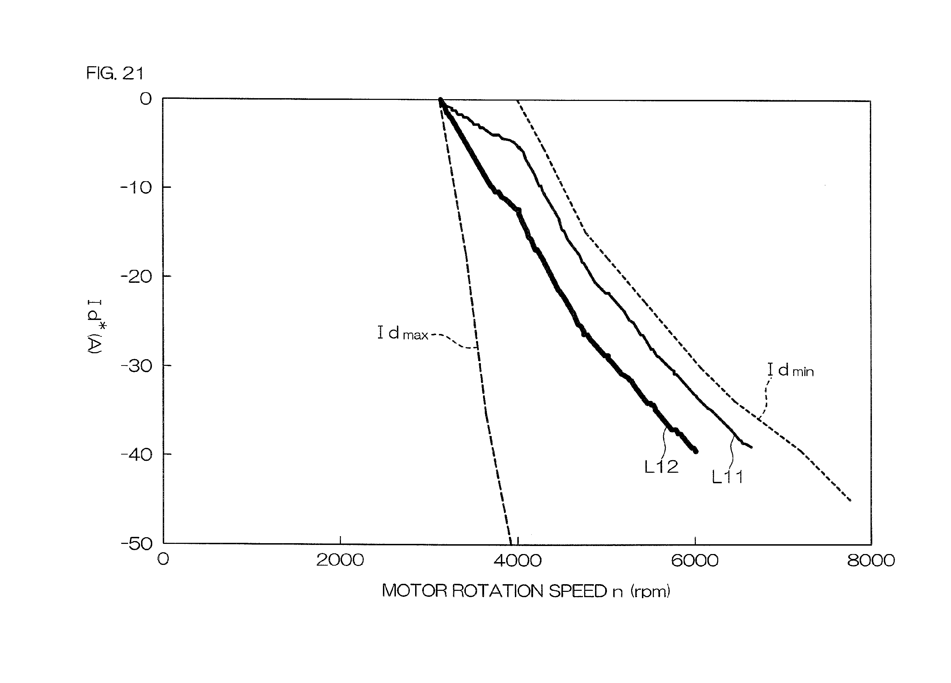

FIG. 21 shows a relationship between the rotation speed n of the electric motor 5 and the d-axis current command value Id* (current command value for field-weakening control) during the regeneration operation. The d-axis current command value Id* is set, for example, in accordance with the q-axis current command value Iq* and the rotation speed n. The d-axis upper limit curve (Idₘₐₓ) and the d-axis lower limit curve (Idₘᵢₙ), shown in FIG. 12, are also shown in FIG. 21. The d-axis current command value Id* is determined within a region sandwiched by these curves.

When the maximum regenerative current is set to the first fixed value, the d-axis current command value Id* is set, for example, in accordance with a curve L11. Also, when the maximum regenerative current is set to the second fixed value, the d-axis current command value Id* is set, for example, in accordance with a curve L12. However, this does not mean that a reference map corresponding to the curves L11 and L12 is prepared. That is, the d-axis current command value Id* is in accordance with the curve L11 or L12 as a result of the gap G in the stator 87, the q-axis current Iq, and the d-axis current Id being controlled with the maximum regenerative current being the control target. The greater the rotation speed n, the greater the absolute value of the d-axis current command value Id*, and the more weakened the magnetic field of the electric motor 5.

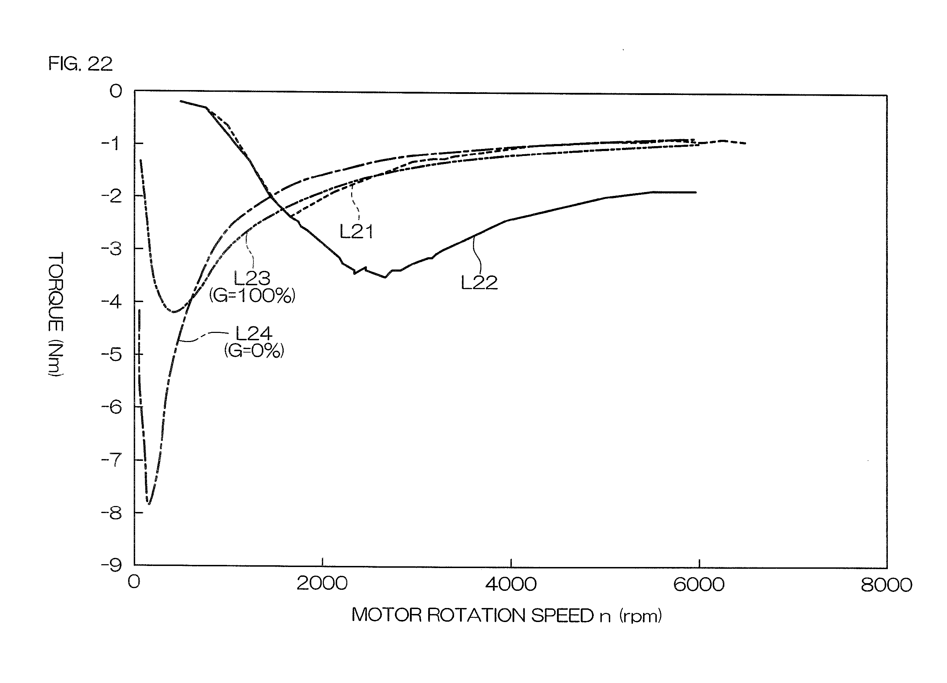

FIG. 22 shows a relationship between the rotation speed n of the electric motor 5 and the braking torque generated by the electric motor 5 during the regeneration operation. The torque generated by the electric motor 5 is proportional to the q-axis current Iq and therefore the braking torque during the regeneration operation is substantially proportional to the q-axis current command value Iq*. A curve L21 indicates the braking torque when the maximum regenerative current is set to the first fixed value and corresponds to the curve L1 of FIG. 19. Similarly, a curve L22 indicates the braking torque when the maximum regenerative current is set to the second fixed value and corresponds to the curve L2 of FIG. 19.

Meanwhile, a curve L23 indicates the braking torque generated by the electric motor 5 when the electric motor 5 is three-phase short-circuited in the state where the gap G of the stator 87 is 100%. Further, a curve L24 indicates the braking torque generated by the electric motor 5 when the electric motor 5 is three-phase short-circuited in the state where the gap G of the stator 87 is 0%. The three-phase short-circuiting is executed when the rotation speed n exceeds the short-circuit threshold A (see FIG. 15) (or is not less than the short-circuit threshold A). Therefore in the normal state, the gap G=100% in the three-phase short-circuited state.

The curve L21 indicating the braking torque when the maximum regenerative current is set to the first fixed value is in conformance with the curves L23 and L24. In particular, the curve L21 substantially matches the braking torque curve L23 for the case of gap G=100%. In other words, the first fixed value is set to correspond to the regenerative current at which a braking torque equivalent to the braking torque in the three-phase short-circuited state is generated. A discontinuous change of the braking torque can thereby be avoided when the three-phase short-circuited state is released and switching to the regeneration operation is performed, and a satisfactory riding feeling can thus be realized.

A case where the gap G is not 100% in the three-phase short-circuited state may also be considered. For example, this corresponds to a case where the short-circuit threshold A and the release threshold A' (see FIG. 15) that are compared with the rotation speed n differ to provide a hysteresis in the execution and release of three-phase short-circuiting. However, as is clear from a comparison of the curves L23 and L24, in a high speed region where the rotation speed n is comparatively high, the braking torque is substantially matched independent of the gap G. That is, in the speed range of the short-circuit threshold A and the release threshold A' (2000rpm to 8000rpm; see FIG. 14), the braking torque is substantially matched independent of the gap G. Therefore, even if the gap G is not 100%, the braking torque does not change greatly when the three-phase short-circuited state is released and switching to the regeneration operation is performed. A satisfactory riding feeling can thus be obtained.

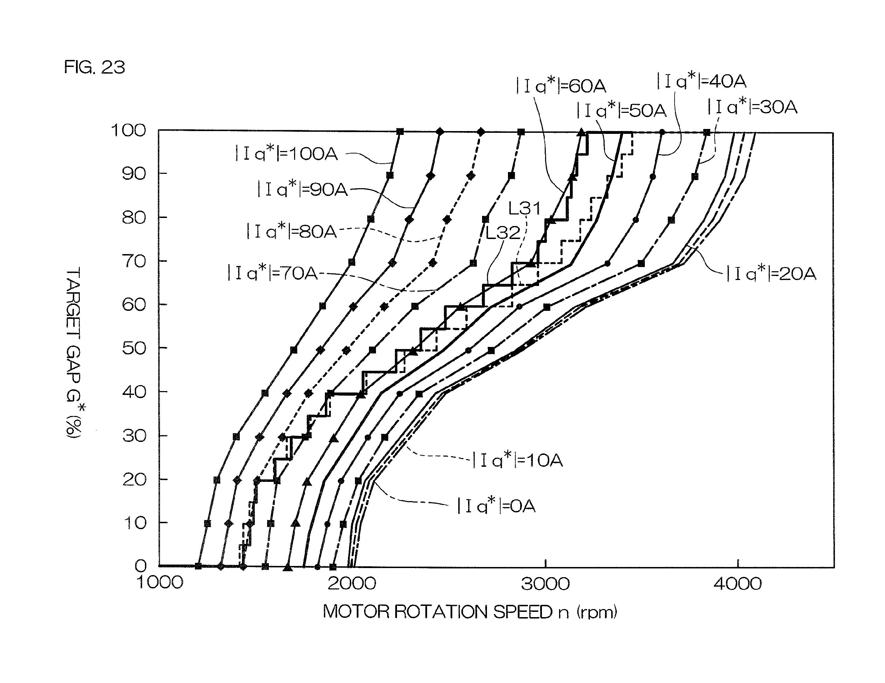

FIG. 23 shows a relationship between the rotation speed n of the electric motor 5 and the target gap G* during the regeneration operation. The set of curves of the target gap map shown in FIG. 13 are also shown in FIG. 23. When the maximum regenerative current is set to the first fixed value, the target gap G* is set, for example, in accordance with a curve L31. Also, when the maximum regenerative current is set to the second fixed value, the target gap G* is set, for example, in accordance with a curve L32. However, this does not mean that a reference map corresponding to the curves L31 and L32 is prepared. That is, the target gap G* is in accordance with the curve L31 or L32 as a result of the q-axis current command value Iq* being controlled with the maximum regenerative current being the control target. In the present example, the target gap G* is changed in stepwise manner at 5% intervals between 100% and 0%.

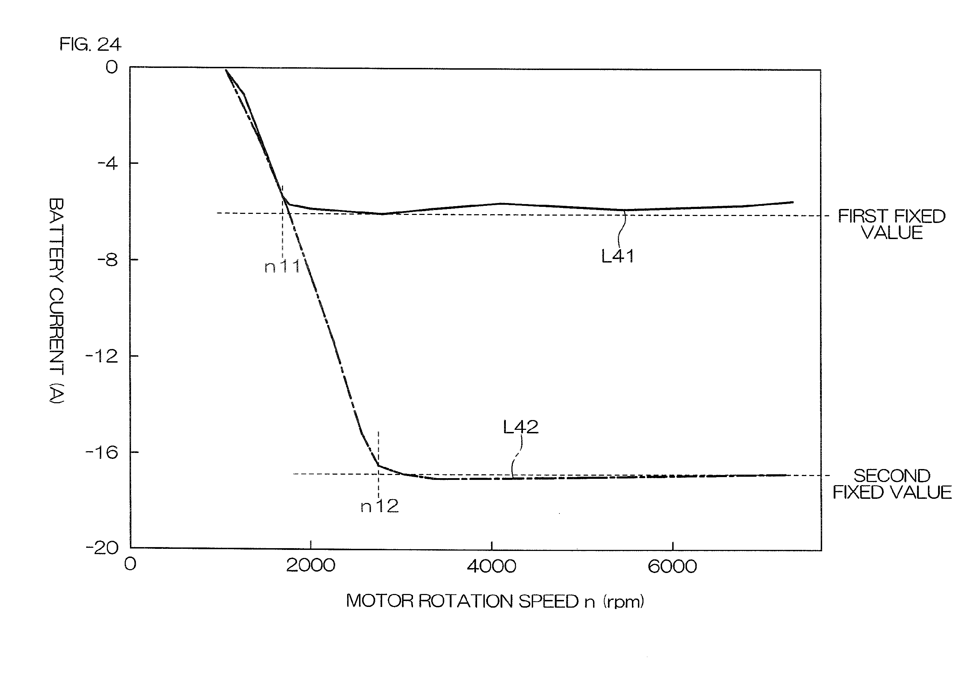

FIG. 24 shows a relationship between the rotation speed n of the electric motor 5 and the regenerative current (battery current) returned to the battery 6 during the regeneration operation. A curve L41 indicates the regenerative current when the maximum regenerative current is set to the first fixed value and corresponds to the curve L1 of FIG. 19. Similarly, a curve L42 indicates the regenerative current when the maximum regenerative current is set to the second fixed value and corresponds to the curve L2 of FIG. 19. In a range of not less than the rotation speed n11 (or of exceeding the rotation speed n11), the curve L41 conforms well to the first fixed value (for example, of 6A). Similarly, in a range of not less than the rotation speed n12 (or of exceeding the rotation speed n12), the curve L42 conforms well to the second fixed value (for example, of 17A). In ranges of less than the rotation speeds n11 and n12 (or not more than the rotation speeds n11 and n12), the regenerative current decreases in accordance with a decrease of the rotation speed n. This is due to the q-axis current command value Iq* being set in accordance with the low speed limit reference curve L (see FIG. 11 and FIG. 19).

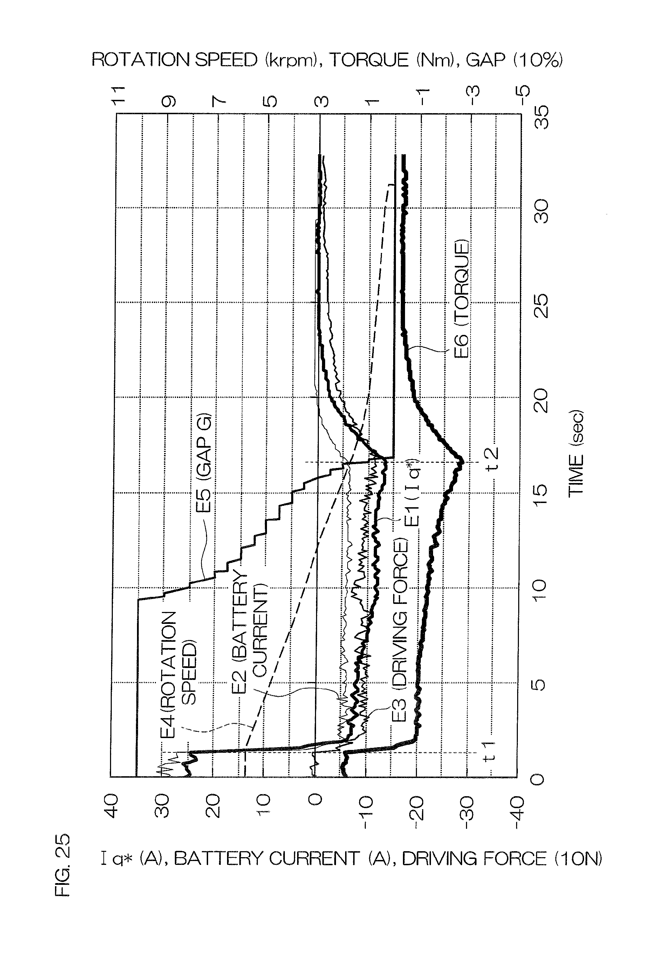

FIG. 25 shows an example of measurement data for a case where the accelerator opening AO is set to zero without performing the brake operation. A curve E1 indicates a change with time of the q-axis current command value Iq*, a curve E2 indicates a change with time of the regenerative current (battery current), and a curve E3 indicates a change with time of a driving force. Further, a curve E4 indicates a change with time of the rotation speed n of the electric motor 5, a curve E5 indicates a change with time of the gap G, and a curve E6 indicates a change with time of the torque generated by the electric motor 5. The driving force indicated by the curve E3 indicates a value calculated based on the deceleration (first order time differential value) of the rotation speed n and the mass of the two-wheeled electric vehicle 1, and indicates a force (driving force or braking force) that acts on the two-wheeled electric vehicle 1. The generated torque indicated by the curve E6 indicates a value estimated from the characteristics of the electrical motor 5, the q-axis current command value Iq*, etc.

When the acceleration opening AO is set to zero at a time t1, the q-axis current command value Iq* becomes a negative value and the regeneration operation is started. Accordingly, the battery current changes to a negative value (regenerative current), a braking torque (negative torque) is generated, and the rotation speed n decreases. In a period up to a time t2, the battery current is maintained at a substantially fixed value (the first fixed value; approximately 6Ainthepresent example) . In a period from the time t2, the q-axis current command value Iq* is set in accordance with the low speed limit reference curve L (see FIG. 11 and FIG. 19). The braking torque thus decreases and the battery current decreases (decreases in absolute value). That is, after deceleration to a low speed range, the braking torque is weakened and the braking force (negative driving force) is weakened accordingly.

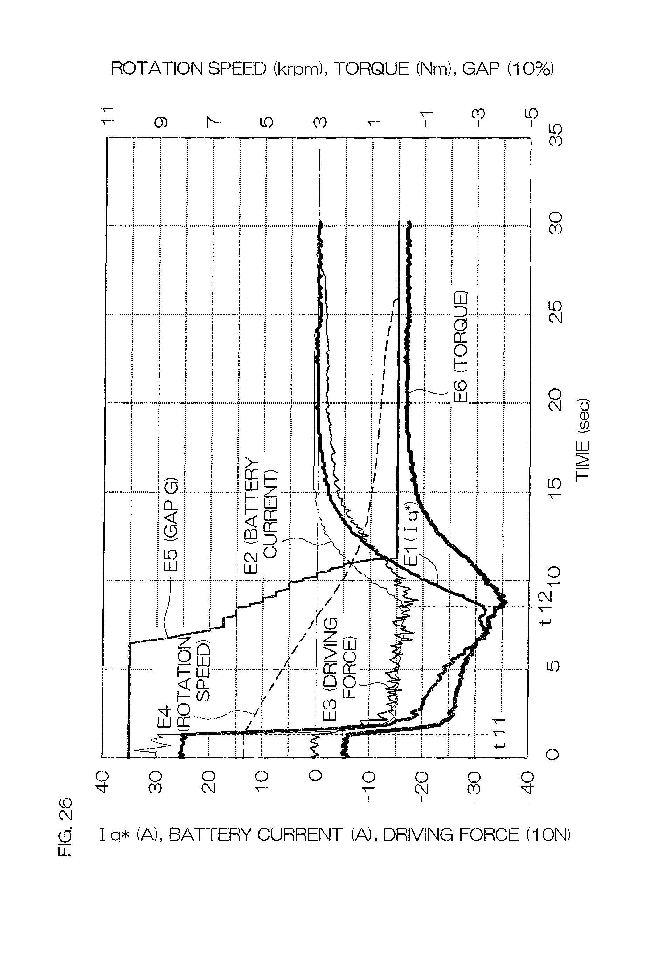

FIG. 26 shows an example of measurement data for a case where the accelerator opening AO is set to zero and the brake operation is performed. However, the measurement data shown are those of a state where, even though the braking sensor 302 is detecting that there is a brake operation, the brake devices 155 and 160 are actually not operating and therefore a mechanical braking force is not acting. In FIG. 26, the same reference symbols as those in FIG. 25 are attached to curves expressing the respective measurement data.

When the acceleration opening AO is set to zero at a time t11 and it is detected that there is a brake operation, the q-axis current command value Iq* becomes a negative value and the regeneration operation is started. Accordingly, the battery current changes to a negative value (regenerative current), a braking torque is generated, and the rotation speed n decreases. In a period up to a time t12, the battery current is maintained at a substantially fixed value (the second fixed value; approximately 17A in the present example). As is clear from a comparison with FIG. 25, the battery current (regenerative current) is made larger and accordingly, a large braking torque is generated and the braking force is in accordance with this as well. In a period from the time t12, the q-axis current command value Iq* is set in accordance with the low speed limit reference curve L (see FIG. 11 and FIG. 19). The braking torque thus decreases, and the battery current decreases (decreases in absolute value). That is, after deceleration to the low speed range, the braking torque is weakened and the braking force is weakened accordingly.

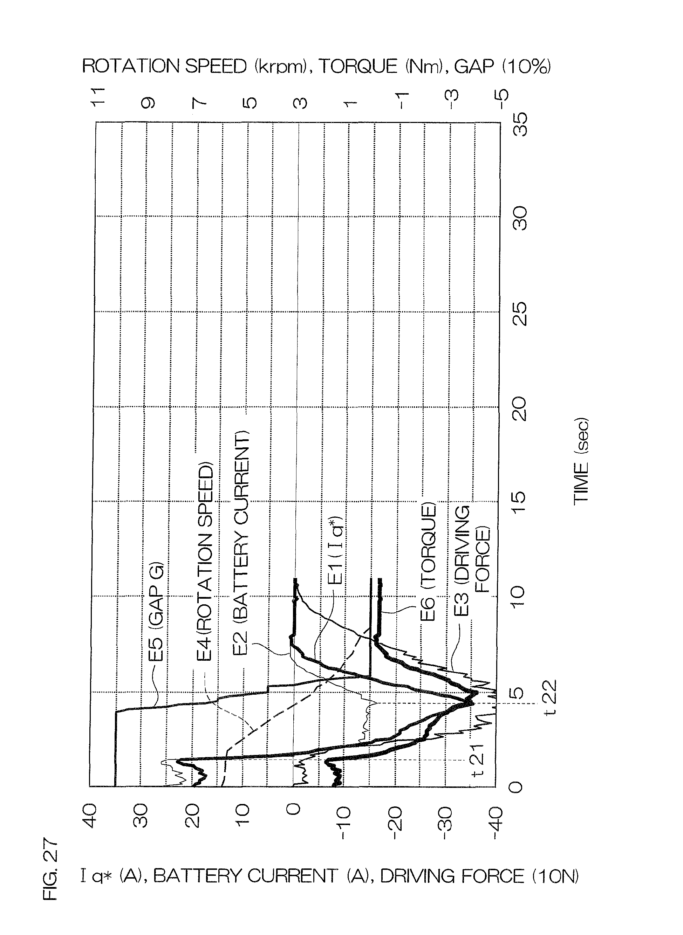

FIG. 27 shows an example of measurement data for a case where the accelerator opening AO is set to zero and the brake operation is performed. In this example, the measurement data shown are those of a state where the braking sensor 302 is detecting that there is a brake operation and the brake devices 155 and 160 are actually operating so that a mechanical braking force is acting. In FIG. 27, the same reference symbols as those in FIG. 25 are attached to curves expressing the respective measurement data.

When the acceleration opening AO is set to zero at a time t21 and it is detected that there is a brake operation, the q-axis current command value Iq* becomes a negative value and the regeneration operation is started. Accordingly, the battery current changes to a negative value (regenerative current), a braking torque is generated, and the rotation speed n decreases. In a period up to a time t22, the battery current is maintained at a substantially fixed value (the second fixed value; approximately 17A in the present example). That is, substantially the same battery current (regenerative current) as that in the case of FIG. 26 is generated, and the electric motor 5 generates a correspondingly large braking torque. Further, the mechanical braking force due to the brake devices 155 and 160 are applied so that a greater braking force than that in the case of FIG. 26 is generated, and accordingly, the rotation speed n of the electric motor 5 decreases rapidly. In a period from the time t12, the q-axis current command value Iq* is set in accordance with the low speed limit reference curve L (see FIG. 11 and FIG. 19). The braking torque thus decreases and the battery current decreases (decreases in absolute value). That is, after deceleration to the low speed range, the braking torque is weakened and the braking force is weakened accordingly.

As described above, with the present preferred embodiment, the motor controller 78 controls the three-phase AC electric motor 5 that generates the driving force to be transmitted to the rear wheel 4. That is, the motor controller 78 controls the current supply from the battery 6 to the coils 5U, 5V, and 5W of the electric motor 5. The electric motor 5 has a magnetic field varying means (the second stator 87 and the stator driving device 79) for changing the strength of a magnetic field, and is arranged to generate the driving force to be transmitted to the rear wheel 4 when the current is supplied from the battery 6 and to generate the regenerative current when the rear wheel 4 is rotated by an external force. The motor controller 78 monitors the accelerator opening AO corresponding to the operation amount of the accelerator grip 12R (accelerator operator) detected by the accelerator operation amount sensor 301 (accelerator operation detection means). The motor controller 78 includes a regeneration control means (the CPU 280 and the current command value calculating portion 311) that executes the regeneration operation of supplying the regenerative current, generated by the electric motor 5, to the battery 6. The regeneration control means executes the regeneration operation when the accelerator opening AO is zero and when the brake sensor 302 detects that there is a brake operation. Also, the motor controller 78 includes the regeneration amount setting portion 340 that sets the maximum regenerative current to the predetermined first fixed value when the accelerator opening AO is zero and sets the maximum regenerative current to the predetermined second fixed value when it is detected there is a brake operation. A sufficient regeneration amount can thereby be secured because fixed maximum regenerative currents are set respectively in accordance with the accelerator off operation and with the brake operation. The strength of the magnetic field of the electric motor 5 (the gap G) changes in accordance with the rotation speed n of the motor and the absolute value |Iq*| of the q-axis current command value Iq*. Therefore by the strength of the magnetic field changing in accordance with the rotation speed n, etc., the braking torque generated by the electric motor 5 during the regeneration operation can be adjusted. Therefore when the electric motor 5 is decelerated while securing the fixed regenerative current, the change of braking torque can be made gradual because the strength of the magnetic field of the electric motor 5 is changed in accordance with the deceleration. The change of braking torque can thereby be lessened to improve the riding feeling while securing a sufficient regeneration amount. By securing a sufficient regeneration amount, the travel distance per single charge of the battery can be increased.

Also with the present preferred embodiment, the second fixed value is set to be greater than the first fixed value. The braking torque generated by the electric motor 5 when the brake operation is performed is thus greater than the braking torque generated when the accelerator off operation is performed. The electric motor 5 thus generates a large braking torque during the brake operation, and a braking torque of a magnitude that is in accordance with the rider' s intention can thus be generated. Also, by the regenerative current being set to a large value, the kinetic energy of the electric motor 5 can be used efficiently for charging the battery 6. The energy efficiency can thereby be improved further, and the travel distance per single charge of the battery can be increased.

Further with the present preferred embodiment, when the rotation speed n of the electric motor 5 is at or lower than the threshold n1, the regeneration control means (the CPU 280 and the current command value calculating portion 311) controls the regenerative current in accordance with the low speed limit reference curve L (see FIG. 11) so that it is smaller when the rotation speed n is lower. That is, when the vehicle speed of the two-wheeled electric vehicle 1 is at or lower than the predetermined vehicle speed threshold (corresponding to the threshold n1), the regenerative current is made smaller when the vehicle speed is lower. With this arrangement, in the low vehicle speed region not more than the vehicle speed threshold, the lower the speed, the smaller the regenerative current, and accordingly, the smaller the braking torque generated by the electric motor 5. A braking sensation during low speed travel can thereby be eased, and a more natural riding feeling can be realized.

Also with the present preferred embodiment, the regeneration control means (the CPU 280 and the current command value calculating portion 311) controls the regenerative current to be zero when the rotation speed of the electric motor 5 is lower than the threshold n2 (see FIG. 11). That is, the regenerative current is set to zero when the vehicle speed of the two-wheeled electric vehicle 1 is at or lower than the predetermined low speed threshold (corresponding to the threshold n2). Therefore in an extreme low speed range, the electric motor 5 does not generate a braking torque, and a more natural riding feeling can thus be realized.

Further, with the present preferred embodiment, the motor controller 78 further includes a magnetic field control means that controls the magnetic field varying means (the second stator 87 and the stator driving device 79) according to the rotation speed n of the electric motor 5. In the present preferred embodiment, the magnetic field control means is arranged from the CPU 280 and particularly from the target gap calculating portion 322, the gap differencecalculating portion 323, the gap PI control portion 324, the actual gap calculating portion 326, etc. The regeneration control means (the CPU 280 and the current command value calculating portion 311) includes the current command value calculating portion 311 (current command value setting means), setting the command value of the current to be made to flow to the electric motor 5, and controls the current supply to the electric motor 5 in accordance with the current command value. The current command value calculating portion 311 sets the current command value in accordance with the strength of the magnetic field (gap G) of the electric motor 5 and the maximum regenerative current set by the regeneration amount setting portion 340.

With this arrangement, the strength of the magnetic field of the electric motor 5 is controlled in accordance with the rotation speed n of the electric motor 5. This enables, for example, the magnetic field to be strengthened in a low speed rotation range to increase a low speed torque or the magnetic field to be weakened in a high speed rotation range to make high speed rotation possible. During the regeneration operation, the current command value is set in accordance with the strength of the magnetic field of the electric motor 5 and the regenerative current to be attained. The strength of the magnetic field is thereby changed in accordance with the change of the rotation speed n of the electric motor 5, and the current command value is set to keep the regenerative current fixed in accordance with the change. The torque generated by the electric motor 5 is substantially proportional to the current command value (especially the q-axis current command value Iq*), and consequently a gradually changing braking torque is obtained. The riding feeling can thereby be improved.

The motor controller 78 is arranged to perform feedback control of the electric motor 5 in accordance with the deviation between the detected current detected by the current detection circuit 354 and the current command value. The current supply to the electric motor 5 is thereby controlled so that the detected current follows the current command value and therefore a sufficient regeneration amount can be secured during the regeneration operation.
Although a preferred embodiment of the present invention has been described in detail above, the present invention may be carried out in yet other modes as well.

For example, although with the preferred embodiment, an example of releasing the three-phase short-circuited state by turning off the lower arm switching elements in the order of the U-phase, V-phase, and W-phase has been described, the order in which the lower arm switching elements are turned off may be changed arbitrarily among the U-phase circuit 351, the V-phase circuit 352, and the W-phase circuit 353. Further, there is no need to set in advance the order of phases for which the short-circuited state is released. That is, the phase for which the timing of drawing in of the phase current into the electric motor 5 arrives first after the generation of the three-phase short-circuit execution request (step S6) may be the first released phase for which the short-circuited state release is performed first. Of the remaining two phases, the phase for which the timing of drawing in of the phase current into the electric motor 5 arrives next may be the second released phase for which the short-circuited state release is performed next. The remaining single phase is the third released phase for which the short-circuited state release is performed last.

Also, with the preferred embodiment, for the first and second phases for which the short-circuited state is released, the release execution condition is that the phase current is in the direction of being drawn into the electric motor 5 (step S28, S31). However, even if the phase current is in the direction of outflow from the electric motor 5, as long as the magnitude of the current is sufficiently small, a large inrush current will not be supplied to the battery 6. Therefore, that the phase current outflowing from the electric motor 5 is less than (or not more than) a prescribed value may be used as the condition for executing the short-circuit release of each phase. Further, depending on the performance of the battery 6, a large inrush current may be tolerated. In such a case, the short-circuit release may be performed simultaneously on the three phases.

Further, in place of performing three-phase short-circuiting and release thereof, a switch may be provided in a middle of a circuit connecting the battery 6 and the motor drive circuit 350. In this case, for example, the motor controller 78 may be arranged to turn off the switch when the short-circuiting conditions are met and to turn on the switch when the release conditions are met.
Further with the preferred embodiment, the electric motor 5 of the axial gap type has been described as an example. However, the present invention can also be applied to a two-wheeled electric vehicle having an electric motor of a radial gap type in which the stator/rotor gap is formed in radial directions orthogonal to the motor shaft.

Also although with the preferred embodiment, the rotation speed n of the electric motor 5 calculated by the rotation speed calculating portion 312 is used as a substitute index for the vehicle speed, a vehicle speed sensor for detecting the vehicle speed or a vehicle wheel speed sensor for detecting the vehicle wheel speed may be provided separately.
Further, although with the preferred embodiment, the two-wheeled electric vehicle 1 of the scooter type has been described as an example, the present invention can be applied similarly to two-wheeled electric vehicles of other modes. The present invention can be applied, for example, to two-wheeled vehicles of the so-called motorcycle type, moped type, off-road vehicle type, etc.

Besides the above, various design changes can be applied within the scope of the matters described in the claims.

### REFERENCE SIGNS LIST

- 1: Two-wheeled electric vehicle
- 3: Front wheel
- 4: Rear wheel
- 5: Electric motor
- 5U: U-phase coil
- 5V: V-phase coil
- 5W: W-phase coil
- 6: Battery
- 12R: Accelerator grip
- 16: Brake lever
- 17: Main switch
- 47: Swing unit
- 78: Motor controller
- 79: Stator driving device
- 81: Rotor
- 82: Stator
- 85: Motor shaft
- 86: First stator
- 87: Second stator
- 89: Coil
- 110: Drive unit
- 111: Driving motor
- 129a: Magnetic field position sensor
- 130a: Magnetic pole position sensor
- 155: Brake device
- 160: Brake device
- 200: Battery controller
- 201: Charging detection portion
- 202: State-of-charge detection portion
- 203: Battery voltage detection portion
- 204: Regeneration command generation portion
- 280: CPU
- 281: Switch drive circuit
- 282: Stator drive circuit
- 301: Accelerator operation amount sensor
- 302: Brake sensor
- 310: Control circuit
- 311: Current command value calculating portion
- 312: Rotation speed calculating portion
- 322: Target gap calculating portion
- 326: Actual gap calculating portion
- 330: Short-circuit/release processing portion
- 340: Regeneration amount setting portion
- 350: Motor drive circuit
- 354: Current detection circuit

## Claims

1. A two-wheeled electric vehicle having a drive wheel, comprising:
a battery;
a three-phase AC electric motor, including a magnetic field varying means that changes a strength of a magnetic field, for generating a driving force to be transmitted to the drive wheel when a current is supplied from the battery, and for generating a regenerative current when the drive wheel is rotated by an external force;
a motor controller for controlling the supply of current from the battery to the electric motor;
an accelerator operator operated by a rider;
an accelerator operation detection means for detecting an operation amount of the accelerator operator;
a brake operator operated by the rider; and
a brake operation detection means for detecting operation or non-operation of the brake operator; wherein
the motor controller includes
a regeneration control means for executing a regeneration operation of supplying the regenerative current, generated by the electric motor, to the battery when a predetermined accelerator operation is detected by the accelerator operation detection means and when operation of the brake operator is detected by the brake operation detection means, and
a regeneration amount setting means for setting a maximum regenerative current, which is a maximum value of the regenerative current, to a predetermined first fixed value when the predetermined accelerator operation is detected by the accelerator operation detection means, and for setting the maximum regenerative current to a predetermined second fixed value when operation of the brake operator is detected by the brake operation detection means.

2. The two-wheeled electric vehicle according to Claim 1, wherein the first fixed value is less than the second fixed value.

3. The two-wheeled electric vehicle according to Claim 1 or 2, further comprising: a vehicle speed detection means for detecting a traveling speed of the two-wheeled electric vehicle; wherein when the vehicle speed detection means detects a vehicle speed equal to or less than a predetermined vehicle threshold, the regeneration control means makes the regeneration current smaller when the vehicle speed is lower.

4. The two-wheeled electric vehicle according to Claim 3, wherein the regeneration control means sets the regenerative current to zero when the vehicle speed detection means detects a vehicle speed equal to or lower than a predetermined low speed threshold.

5. The two-wheeled electric vehicle according to any one of Claims 1 to 4, further comprising: a rotation speed detection means for detecting the rotation speed of the electric motor; wherein
the motor controller further includes a magnetic field control means that controls the magnetic field varying means according to the rotation speed detected by the rotation speed detection means, and
the regeneration control means includes a current command value setting means for setting a command value of the current that is to be made to flow to the electric motor in accordance with the strength of the magnetic field of the electric motor and the maximum regenerative current set by the regeneration amount setting means, and controls the current supply to the electric motor in accordance with the current command value.
